# EUROPÄISCHE PATENTSCHRIFT

(11) **EP 2 224 330 B1**
(45) Veröffentlichungstag und Bekanntmachung des Hinweises auf die Patenterteilung: **09.05.2012**
(21) Anmeldenummer: 10005502.9
(22) Anmeldetag: 20.06.2002
(51) Int. Cl.: G06F 9/44, G06F 9/45

(54) **VERFAHREN UND GERÄT ZUM PARTITIONIEREN VON GROSSEN RECHNERPROGRAMMEN**
METHOD AND DEVICE FOR PARTITIONING LARGE COMPUTER PROGRAMS
PROCEDE ET SYSTEME POUR DECOUPER DES LOGICIELS VOLUMINEUX

(30) Priorität: 20.06.2001 DE 10129237; 20.06.2001 EP 01115021; 24.07.2001 DE 10135210; 24.07.2001 DE 10135211; 16.08.2001 DE 10139170; 29.08.2001 DE 10142231; 03.09.2001 DE 10142903; 03.09.2001 DE 10142894; 03.09.2001 DE 10142904; 11.09.2001 DE 10144732; 11.09.2001 DE 10144733; 17.09.2001 DE 10145792; 17.09.2001 DE 10145795; 19.09.2001 DE 10146132; 05.11.2001 DE 10154260; 05.11.2001 DE 10154259; 14.12.2001 EP 01129923; 18.01.2002 EP 02001331; 19.01.2002 DE 10202044; 20.01.2002 DE 10202175; 15.02.2002 DE 10206653; 18.02.2002 DE 10206857; 18.02.2002 DE 10206856; 21.02.2002 DE 10207225; 21.02.2002 DE 10207224; 21.02.2002 DE 10207226; 27.02.2002 DE 10208435; 27.02.2002 DE 10208434; 21.03.2002 DE 10212621; 21.03.2002 DE 10212622; 02.05.2002 EP 02009868
(43) Veröffentlichungstag der Anmeldung: 01.09.2010
(62) Teilanmeldung aus: 02780770.0
(73) Patentinhaber: Krass, Maren, 8044 Zürich (CH); Richter, Thomas, 04703 Bockelwitz (DE)
(72) Erfinder: Vorbach, Martin, 67360 Lingenfeld (DE); Nückel, Armin, Dr., 63303 Dreieich (DE); May, Frank, 81927 München (DE); Weinhardt, Markus, Dr., 49076 Osnabrück (DE); Cardoso, Joao Manuel Paiva, 3650 Vila Nova de Paiva (PT)
(74) Vertreter: Pietruk, Claus Peter

(56) Entgegenhaltungen:
- EP-A1- 0 926 594
- WO-A2-00/77652
- JANTSCH A ET AL: "A case study on hardware/software partitioning" FPGAS FOR CUSTOM COMPUTING MACHINES, 1994. PROCEEDINGS. IEEE WORKSHOP ON NAPA VALLEY, CA, USA 10-13 APRIL 1994, LOS ALAMITOS, CA, USA,IEEE COMPUT. SOC, 10. April 1994 (1994-04-10), Seiten 111-118, XP010098092 ISBN: 0-8186-5490-2

## Beschreibung

Die vorliegende Erfindung befaßt sich mit Datenverarbeitung. Insbesondere befaßt sich die vorliegende Erfindung mit herkömmlichen, d.h. konventionellen und rekonfigurierbaren Prozessorarchitekturen sowie mit Verfahren hierfür, die eine Übersetzung einer klassischen Hochsprache (PROGRAMM) wie Pascal, C, C++, Java, etc. ermöglichen, insbesondere auf eine rekonfigurierbare Architektur. Insbesondere befaßt sich die vorliegende Erfindung mit der Integration und/oder engen Kopplung von rekonfigurierbaren Prozessoren mit Standardprozessoren, dem Datenaustausch und der Synchronisation der Datenverarbeitung.

Unter einer konventionellen Prozessorarchitektur (PROZESSOR) werden vorliegend beispielsweise sequentielle Prozessoren mit einer von-Neumann- oder Harvardarchitektur verstanden, wie z.B. Kontroller, CISC-, RISC-, VLIW-, DSP-, u.ä. Prozessoren verstanden.

Unter einer rekonfigurierbaren Zielarchitektur werden vorliegend Bausteine (VPU) mit wiederholt und insbesondere zur Laufzeit insbesondere unterbrechungsfrei konfigurierbarer Funktion und/oder Vernetzung verstanden, insbesondere integrierte Bausteine mit einer Mehrzahl von ein- oder mehrdimensional angeordneten arithmetischen und/oder logischen und/oder analogen und/oder speichernden insbesondere evtl. auch grobgranularen Baugruppen (PAE), die direkt oder durch ein Bussystem miteinander verbunden sind.

Zur Gattung dieser Bausteine zählen insbesondere systolische Arrays, neuronale Netze, Mehrprozessor Systeme, Prozessoren mit mehreren Rechenwerken und/oder logischen Zellen, Vernetzungs- und Netzwerkbausteine wie z.B. Crossbar-Schalter, ebenso wie bekannte Bausteine der Gattung FPGA, DPGA, XPUTER, etc.. Hingewiesen wird insbesondere in diesem Zusammenhang auf die folgenden Schutzrechte desselben Anmelders: P 44 16 881.0-53, DE 197 81 412.3, DE 197 81 483.2, DE 196 54 846.2-53, DE 196 54 593.5-53, DE 197 04 044.6-53, DE 198 80 129.7, DE 198 61 088.2-53, DE 199 80 312.9, PCT/DE 00/01869, DE 100 36 627.9-33, DE 100 28 397.7, DE 101 10 530.4, DE 101 11 014.6, PCT/EP 00/10516, EP 01 102 674.7, DE 196 51 075.9-53, DE 196 54 846.2-53, DE 196 54 593.5-53, DE 197 04 728.9, DE 197 07 872.2, DE 101 39 170.6, DE 199 26 538.0, DE 101 42 904.5, DE 101 10 530.4.

Das System kann insbesondere als (Standard)-Prozessor oder Baugruppe ausgestaltet sein und/oder in einem Halbleiter (System on Chip SoC) integriert sein.

Rekonfigurierbare Bausteine (VPUs) unterschiedlicher Gattungen (wie z.B. PACT XPP-Technologie, Morphics, Morphosys, Chameleon) sind zu bestehenden technischen Umgebungen und Programmierverfahren weitgehend inkompatibel.

Programme für diese Bausteine sind typisch inkompatibel zu bereits bestehenden Programmen von CPUs. Dadurch wird ein erheblicher Entwicklungsaufwand zur Programmierung erforderlich, z.B. besonders für Bausteine der Gattungen Morphics, Morphosys. Chameleon integriert bereits einen Standardprozessor (ARC) auf mehr oder minder rekonfigurierbaren Bausteinen. Dadurch stehen Ansätze für Tools zur Programmierung zur Verfügung. Allerdings ist nicht jede technische Umgebung für den Einsatz von ARC-Prozessoren geeignet, insbesondere liegen bestehende Programme, Codebibliotheken etc. oftmals für beliebige unbestimmte andere CPUs vor.

Es hat sich in internen Versuchen gezeigt, daß es bestimmte Verfahren und Programmabläufe gibt, die sich besser mit einer rekonfigurierbare Architektur abarbeiten lassen als mit einer konventionellen Prozessorarchitektur. Umgekehrt gibt es auch solche Verfahren und Programmabläufe, die besser mit einer konventionellen Prozessorarchitektur ausgeführt werden können. Es ist dafür wünschenswert, um eine jeweilige Optimierung zu ermöglichen, eine Ablaufteilung vorzusehen.

Bekannte Übersetzungsverfahren für rekonfigurierbare Architekturen unterstützen keine Weitergabe von Codes an beliebige Standard-Compiler zur Generierung von Objektcodes für einen beliebigen PROZESSOR. Gewöhnlicherweise ist der PROZESSOR fest innerhalb des Compilers definiert.

Weiterhin existieren keine Scheduling-Mechanismen zur Rekonfiguration der einzelnen generierten Konfigurationen für VPUs. Insbesondere fehlen Scheduling-Mechanismen für die Konfiguration unabhängiger extrahierter Teile gleichwohl wie für einzelne Partitionen extrahierter Teile. Entsprechende Übersetzungsverfahren nach dem Stand der Technik sind beispielsweise definiert durch die Dissertation "Übersetzungsmethoden für strukturprogrammierbare Rechner, Dr. Markus Weinhardt, 1997".

Zur Partitionierung von Array-CODE sind mehrere Verfahren nach dem Stand der Technik bekannt, z. B. Joao M. P. Cardoso, "Compilation of Java™ Algorithms onto Reconfigurable Computing Systems with Exploitation of Operation-Level Parallelism", Ph. D. Thesis Universidade Técnica de Lisboa (UTL), 2000.

Diese Verfahren sind jedoch in keine kompletten Compilersysteme eingebettet. Weiterhin setzen die Verfahren die vollständige Steuerung der Rekonfiguration durch einen Hostprozessor voraus, was einen erheblichen Aufwand bedeutet. Die Partitionierungsstrategien sind für FPGA-basierende Systeme ausgelegt und entsprechen daher keinem echten Prozessormodell.

Die Aufgabe dieser Erfindung besteht darin, Neues für die gewerbliche Anwendung bereitzustellen.

Die Lösung dieser Aufgabe wird in unabhängiger Form beansprucht. Bevorzugte Ausführungen finden sich in den Unteransprüchen.

Ein rekonfigurierbarer Prozessor (VPU) wird somit in eine technische Umgebung eindesigned, die einen Standardprozessor (CPU) besitzt, wie beispielsweise einen DSP, RISC, CISC-Prozessor oder (Mikro)-Kontroller aufweist. Das Design kann erfindungsgemäß derart erfolgen, dass eine einfache und leistungsfähige Anbindung besteht. Ein sich ergebender Aspekt ist die einfache Programmierbarkeit des entstehenden Systems. Die Weiterverwendung bestehender Programme der CPU sowie die Codekompatibilität und die einfache Integration der VPU in die bestehenden Programme finden Berücksichtigung.

Eine VPU (oder ohne jeweils besonders erwähnt zu werden, mehrere VPUs) wird derart mit einer bevorzugten CPU (oder ohne jeweils besonders erwähnt zu werden, mehreren CPUs) gekoppelt, dass sie die Stelle und Funktion eines Coprozessors (bzw. mehrerer wahlweise ansprechbarer Coprozessoren) einnimmt. Die Funktion ermöglicht die einfache Einbindung in bestehende Programmcodes entsprechend den bereits existierenden Methoden zum Umgang mit Coprozessoren nach dem Stand der Technik.

Der erfindungsgemäße Datenaustausch zwischen CPU und VPU kann mittels Speicherkopplung und/oder IO-Kopplung erfolgen. CPU und VPU können sämtliche Ressourcen teilen, in besonderen Ausgestaltungen ist es auch möglich, dass CPU und VPU nur einen Teil der Ressourcen gemeinsam verwenden und andere Ressourcen jeweils explizit und/oder exclusive für eine CPU oder VPU zur Verfügung stehen.

Um einen Datenaustausch durchzuführen, können Datensätze und/oder Konfigurationen in jeweils besonders dafür vorgesehen Speicherbereiche kopiert bzw. geschrieben/gelesen werden und/oder entsprechende Basisadressen gesetzt werden, dass diese auf die jeweiligen Datenbereiche zeigen.

Zur Steuerung des Coprozessors wird bevorzugt ein Datensatz vorgesehen, der beispielsweise die Grundeinstellungen einer VPU beeinhaltet, wie beispielsweise bestimmte Basisadressen. Desweiteren können Statusvariablen zur Ansteuerung und Funktionssteuerung einer VPU durch eine CPU sowie für Rückmeldungen einer VPU an eine CPU vorgesehen sein. Der Datensatz kann über einen gemeinsamen Speicher (RAM) und/oder über einen gemeinsamen peripheren Adressraum (IO) ausgetauscht werden.

Zur Synchronisation der CPU und VPU können einseitig oder gegenseitig wirkende Interruptverfahren (die z.B. durch Signaltransfer über insbesondere dedizierte bzw. hierfür ausgebildete Interruptleitungen und/oder Interrupteingänge realisiert sind) vorgesehen sein und/oder die Synchronisation erfolgt mittels Pollingverfahren. Weiterhin können Interrupts zur Synchronisation von Daten- und/oder DMA-Transfers verwendet werden.

In einer besonders zu bevorzugenden Ausgestaltung wird eine VPU durch eine CPU gestartet und arbeitet danach bevorzugt unabhängig die Applikation ab.

Besonders leistungsfähig ist ein bevorzugter Aufbau, bei welchem die verwendete VPU eigene Mechanismen zum Laden und Kontrollieren von Konfigurationen vorsieht. Zur Gattung dieser VPUs gehören beispielsweise PACT XPP und Chameleon. Die erfindungsgemäßen Schaltungen ermöglichen ein Verfahren zum Betrieb derart, dass die Konfigurationen der VPU zusammen mit dem auszuführenden Programm der CPU in einen Speicher geladen werden. Die CPU kann während der Ausführung des Programms die VPU auf die Speicherstellen verweisen (z.B. durch Angabe der Adressen oder Pointer), die die jeweils auszuführenden Konfigurationen beinhalten. Die VPU kann daraufhin die Konfigurationen selbständig und ohne weitere Einflussnahme durch die CPU laden. Die Ausführung startet sofort oder ggf. durch eine zusätzliche Information (z.B. Interrupt und/oder Start Befehl) durch die CPU.

In einer besonders bevorzugten Erweiterung kann die VPU selbständig innerhalb eines Speichers Daten lesen und schreiben.

In einer besonders bevorzugten Erweiterung kann die VPU ebenfalls selbständig neue Konfigurationen aus dem Speicher laden und sich bei Bedarf neu konfigurieren, ohne dass es eines weiteren Einflusses durch die CPU bedarf.

Diese Ausgestaltungen ermöglichen einen weitestgehend von CPUs unabhängigen Betrieb von VPUs. Lediglich ein Synchronisationsaustausch zwischen CPU und VPU, der bevorzugt bidirektional stattfinden kann, sollte zusätzlich vorgesehen werden, um die Datenverarbeitungen und/oder Konfigurationsausführungen aufeinander abzustimmen.

Es wurde weiter erkannt, daß Verfahren zur Datenverarbeitung bevorzugt so ausgelegt werden können und/oder sollen, daß jeweils für die rekonfigurierbare Zielarchitektur (VPU) besonders geeignete Teile (VPU-CODE) des zu übersetzenden Programmes identifiziert und extrahiert werden, um eine besonders effiziente Datenverarbeitung zu ermöglichen. Diese Teile sind entsprechend zu partitionieren und die Konfiguration der einzelnen Partitionen ist in ihrer zeitlichen Reihenfolge zu steuern.

Die verbleibenden Teile des Programms können auf eine konventionelle Prozessorarchitektur (PROZESSOR) übersetzt werden. Dies geschieht bevorzugt dergestalt, daß diese Teile als Hochsprachencode in einer Standard-Hochsprache (z. B. ANSI C) derart ausgegeben werden, daß ein gewöhnlicher (ggf. bereits existierender) Hochsprachencompiler diese ohne weiteres verarbeiten kann.

Weiterhin sei angemerkt, daß die Verfahren auch auf Gruppen von mehreren Bausteinen angewendet werden können.

Insbesondere kann eine Art "Double-Buffering" zur besonders einfachen und zugleich schnellen Rekonfiguration angewendet werden, in welchem eine Mehrzahl von VPUs vorgesehen sind, wobei ein Teil der VPUs zu einer Zeit rekonfiguriert werden kann, zu welcher ein anderer Teil rechnet und möglicherweise ein Weiterer etwa inaktiv sein kann. Die Daten-, Trigger-, Statusverbindungen etc. werden zwischen der Mehrzahl von VPUs geeignet ausgetauscht und ggf. durch adressierte Busse und/oder Multiplexer/Demultiplexer entsprechend der aktuell aktiven und/oder zu rekonfigurierenden VPUs verschaltet.

Ein Vorteil dieses Verfahrens liegt darin, daß bestehender Code, der für einen beliebigen PROZESSOR geschrieben wurde, unter Einbeziehung einer VPU weiterverwendet werden kann und keine oder nur vergleichsweise geringe Modifikationen durchgeführt werden müssen. Die Modifikationen können zudem schrittweise erfolgen, wobei nach und nach immer mehr Code von dem PROZESSOR auf die VPU übertragen werden kann. Das Projektrisiko sinkt und die Überschaubarkeit steigt wesentlich an. Es wird darauf hingewiesen, daß einer derartigen sukzessive Übertragung von immer mehr Aufgaben auf die VPU, d.h. auf das integrale multidimensionale partiell rekonfigurierbaren insbesondere grobgranulare Feld an Elementen, eine besondere Bedeutung für sich hat und für sich als erfinderisch angesehen wird aufgrund seiner gravierenden Vorteile bei der Systemportierung.

Weiterhin kann der Programmierer in seiner gewohnten Entwicklungsumgebung arbeiten und muß sich nicht auf eine neue, möglicherweise fremde Entwicklungsumgebung einstellen.

Ein erster wesentlicher Aspekt der vorliegenden Erfindung ist darin zu sehen, daß ein PROZESSOR derart mit einer oder mehreren VPU(s) verbunden wird, daß ein effizienter Informationsaustausch, insbesondere in Form von Daten- und Statusinformation möglich ist.

Der Anordnung eines herkömmlichen Prozessors und eines rekonfigurierbaren Prozessors, dergestalt, daß ein Austausch von Daten- und/oder Statusinformation zwischen denselben während der Abarbeitung eines oder mehrerer Programme möglich ist und/oder ohne daß insbesondere die Datenverarbeitung auf dem rekonfigurierbaren Prozessor und/oder dem herkömmlichen Prozessor signifikant unterbrochen werden muß, sowie der Ausbildung eines derartigen Systems, wird gleichfalls für sich Bedeutung zugemessen.

Es können zunächst beispielsweise eines oder alle der folgenden Verbindungsverfahren und/oder -mittel verwendet werden:
a) Shared-Memory
b) Netzwerk (beispielsweise Bussysteme wie z.B. PCI-Bus, Serielle Busse wie z.B. Ethernet)
c) Kopplung an einen internen Registersatz oder mehrere interne Registersätze
d) andere Speichermedien (Festplatte, Flash-ROM, etc.)

Prinzipiell kann auch die VPU und/oder CPU selbständig ohne Zuhilfenahme eines DMAs auf den Speicher zugreifen. Der gemeinsame Speicher kann insbesondere auch als Dualport- oder Multiportspeicher ausgestaltet sein. Dem System können weitere

Baugruppen zugeordnet werden, insbesondere können rekonfigurierbare FPGAs eingesetzt werden, um eine feingranulare Verarbeitung von einzelner Signale oder Datenbits zu ermöglichen und/oder flexible adaptierbare Interface (z.B. diverse serielle Schnittstellen (V24, USB, etc.), diverse parallele Schnittstellen, Festplattenschnittstellen, Ethernet, Telekommunikationsschnittstellen (a/b, T0, ISDN, DSL, etc.)) aufbauen zu können.

Der Aufbau einer VPU ist beispielsweise bekannt aus den o. g. zitierten Anmeldungen. Versuche zu alternativen Bausteindefinitionen sind beispielsweise unter dem Namen Chameleon geführt worden. VPUs lassen sich auf unterschiedliche Weise in ein System integrieren. Ein Anschluß an einen Hostprozessor ist beispielsweise möglich. Je nach Verfahren kann der Hostprozessor die Konfigurationskontrolle (HOSTRECONF) mit übernehmen (z. B. Chameleon) oder, z. B., eine dedizierte Einheit (CT) zur Steuerung der (Re)Konfiguration bestehen. Entsprechend generiert der Übersetzer gemäß dem beschriebenen Verfahren die Steuerinformation für die Rekonfiguration für eine CT und/oder einen HOSTRECONF.

Es kann nun das Übersetzungsprinzip derart ausgestaltet sein, daß aus einem PROGRAMM mittels eines PRÄPROZESSORS die Teile extrahiert werden, die sich auf die jeweils bestimmte(n) VPU(s) effizient und/oder sinnvoll abbilden lassen. Diese Teile werden in ein für VPUs geeignetes Format transformiert (NML) und dann weiter in einen Objektcode übersetzt.

Der verbleibenden Code und/oder der extrahierte Code wird erfahrungsgemäß an oder bezüglich der Stelle der durch die Extraktion fehlenden Code-Teile um einen Interface-Code erweitert, der entsprechend der Architektur des Zielsystems die Kommunikation zwischen PROZESSOR(en) und VPU(s) steuert.

Der verbleibende und ggf. erweiterte Code kann bevorzugt extrahiert werden sollen. Beispielsweise kann dies folgendermaßen erfolgen:

```
    ...
    Code
    ...
    # START_EXTRACTION
    Zu extrahierender Code
    # END_EXTRACTION
    ...
    Code
    ...
 "// START_EXTRACTION" kennzeichnet den Beginn eines zu extra-
 hierenden Codes.
 "// END_EXTRACTION" kennzeichnet das Ende eines zu extrahie-
 renden Code.
```

In einem solchen Fall ist die Einheit zur Umsetzung des Programms in Konfigurationscodes dazu ausgebildet, die Hints beziehungsweise Umsetzungsvorgaben zu erkennen.

Es ist auch möglich, daß zur Extraktion durch Aufruf von NML-Routinen Teile des PROGRAMMES direkt in NML implementiert werden und in die NML-Routinen durch Aufrufe (calls) gesprungen wird. Beispielsweise erfolgt dies derart:

### a) NML-Code

```
    ...
    procedure EXAMPLE
    begin
    ...
    end
    ...
```

### b) PROGRAMM Code

```
    ...
    Code
    ...
    call EXAMPLE // Aufruf des NML-Codes
    Code
    ...
```

In diesem Fall ist die Einheit zur Umsetzung dazu ausgebildet, NML-Programmteile, das heißt Programmteile zur Ausführung in und/oder auf einem rekonfigurierbaren Array in ein größeres Programm einzubinden.

Es ist weiter alternativ und/oder zusätzlich eine Extraktion aus einer objektorientierten Klasse möglich. Für eine VPU geeignete Makros werden als Klasse in der Klassenhierarchie einer objektorientierten Programmiersprache definiert. Die Makros können dabei durch Annotation derart gekennzeichnet sein, daß sie als für eine VPU bestimmte Codes erkannt und entsprechend - auch in höheren Hierarchien der Sprache - weiterverarbeitet werden.

Innerhalb eines Makros ist bevorzugt eine bestimmte Vernetzung und/oder Abbildung durch das Makro vorgegeben, die sodann die Abbildung des Makros auf die VPU bestimmt.

Durch die Instantiierung und Verkettung der Klasse entsteht eine Implementierung der Funktion, bestehend aus mehreren Makros auf der VPU. Mit anderen Worten definiert die Instantiierung und Verkettung der Makros die Abbildung und Vernetzung der einzelnen Operationen aller Makros auf der VPU und/oder ggf. die Vernetzung und/oder den Datenaustausch zwischen VPU und CPU.

Die Interfacecodes werden bei der Instantiierung hinzugefügt. Die Verkettung beschreibt das detaillierte Mapping der Klasse auf die VPU.

Eine Klasse kann beispielsweise auch als ein Aufruf einer oder mehrerer NML-Routinen gebildet werden.

### a) Klassen-Code

```
    ...
    class EXAMPLE
    begin
    ...
    end
    ...
```

### b) PROGRAMM Code

```
    ...
    Code
    ...
    EXAMPLE var() // Instantiierung der Klasse
    ...
    Code
    ...
```

Es ist weiter auch eine Extraktion durch Analyse möglich. Durch an die jeweilige VPU angepaßte Analysemethoden werden Teile innerhalb des PROGRAMMES erkannt, die effizient und/oder sinnvoll auf die VPU abbildbar sind.

Diese Teile werden aus dem PROGRAMM extrahiert.

Eine beispielsweise für viele VPUs geeignete Analysemethode ist der Aufbau von Datenfluß- und/oder Kontrollflußgraphen aus dem PROGRAMM. Diese Graphen können hinsichtlich ihrer möglichen Partitionierung und/oder Abbildung auf die Ziel-VPU automatisch untersucht werden. In diesem Fall werden die Teile der generierten Graphen bzw. die entsprechenden PROGRAMMTEILE, extrahiert, die sich hinreichend gut partitionieren und/oder abbilden lassen. Hierzu kann eine Partitionierbarkeits- und/oder Abbildbarkeitsanalyse erfolgen, die die jeweilige Eigenschaft bewertet Entsprechend dieser Bewertung erfolgt dann die Partitionierung und Extraktion der Programmteile auf die VPU, sowie das Einführen der vorgesehenen Interfaces..

Es soll ausdrücklich auf die in der Patentanmeldung DE 101 39 170.6 beschriebenen Analysemethoden verwiesen werden, die beispielsweise zur Anwendung kommen können. Die vorerwähnte Anmeldung ist zu Offenlegungszweckung vollumfänglich eingegliedert.

Eine mögliche Analysemethode ist auch durch Erkennung bestimmter Datentypen gegeben.

Unterschiedliche Datentypen eignen sich mehr oder weniger gut für die Bearbeitung auf einer VPU. Beispielsweise ist eine komplexe Pointer-Arithmetik, bzw. eine pointerbasierende Datenadressierung (pointer) schwer auf eine VPU abbildbar, während sich Arrays (array) sehr gut abbilden lassen.

Erfindungsgemäß können daher weitgehend automatisch oder manuell die jeweils geeigneten Datentypen und zumindest wesentliche Teile von deren Datenverarbeitung auf eine VPU übertragen und entsprechend extrahiert werden. Die Extraktion erfolgt damit im Ansprechen auf das Auftreten bestimmter Datentypen und/oder Datenoperationen.

Es soll erwähnt werden, daß zusätzliche, den Datentypen zugeordnete Parameter weitere Hinweise zur Bestimmung der Ausführbarkeit und/oder Ausführungsperformance auf einer VPU geben können und daher maßgeblich zur Extraktion mitverwendet werden können. Beispielsweise spielt die Größe von zu berechnenden Arrays eine wesentliche Rolle. Es lohnt sich zumeist nicht, kleine Arrays auf einer VPU zu berechnen, da hier der Synchronisations- und Datenaustauschaufwand zwischen CPU und VPU zu hoch sein kann. Einschränkend ist aber dabei wiederum zu erwähnen, daß kleine Arrays, die innerhalb einer Schleife besonders häufig verrechnet werden, sich dennoch sehr gut für VPUs eignen, insofern die Schleife weitestgehend komplett auf der VPU berechnet wird. Große Arrays können dagegen zumeist ohne weiteres auf einer VPU besonders performant berechnet werden.

Weiterhin soll erwähnt werden, daß besondere Datentypen durch einen besonders angepaßten Compiler oder ggf. durch einen Anwender (z. B. mittels TYPE in Pascal) erstellt werden können, die sich besonders für VPUs eignen und deren Datenverarbeitung dann auf einer VPU ausgeführt wird.

Beispielsweise können folgende Datentypen bestehen:
TYPE stream1 of Byte [] ;
TYPE stream2 of Byte [0..255 ;

Stream definiert einen Datenstrom (stream) von in der Regel großer, ggf. nicht vorbekannter und/oder unendlicher Länge. Stream1 hatte hier eine nicht vorbekannte Länge. Beispielsweise könnte ein mit diesem Datentyp programmierter FIR-Filter (oder z. B. eine FFT oder DCT) automatisch - und ggf ausgewalzt - auf eine VPU abgebildet werden. Die Rekonfiguration erfolgt dann typisch und bevorzugt im Ansprechen auf andere Mechanismen als den Datenstromverlauf, z.b. durch Zähler, Vergleicher, CT-gesteuert und/oder durch Time-Out. Soll hierbei etwa eine Wave- oder andere Rekonfiguration ausgelöst werden, so kann diese über eine durch vorgenannte Methoden veranlaßte Kennzeichnung eines Datenpaketes, insbesondere Datenbytes, als ein letztes zu sein erfolgen um nach und/oder mit dem Durchlauf dieses als letzes Datenpaket gekennzeichneten Datenpaketes die Rekonfiguration auszulösen.

stream2 definiert einen Datenstrom der Länge von hier 256 Byte, der wie stream1 behandelt werden kann, jedoch die Eigenschaft aufweist, nach 256 Byte zu enden und damit nach Beendigung möglicherweise eine Rekonfiguration im Sinne der vorab zitierten Patente selbigen Anmelders auslösen kann. Insbesondere kann eine Wave-Rekonfiguration (z. B. nach DE 197 04 728.9, DE 199 26 538.0, DE 102 06 857.7, DE 100 28 397.7) mit dem Eintreffen des letzten Daten-Bytes ausgelöst werden und mit der Verarbeitung dieses letzten Daten-Bytes die jeweilige, das Byte verarbeitende PAE rekonfiguriert werden.

Eine für die implementierte VPU geeignete Übersetzung des extrahierten Codes nach NML kann bevorzugt durchgeführt werden.

Für datenflußorientierte VPUs kann beispielsweise automatisch ein Datenfluß- und/oder Kontrollflußgraph aufgebaut werden. Die Graphen werden dann in NML-Code übersetzt.

Entsprechende Code-Teile wie z. B. Schleifen können mittels einer Datenbank (LookUp) übersetzt werden oder gewöhnliche Transformationen können durchgeführt werden. Für Codeteile können auch Makros vorgesehen sein, die dann gemäß den in vorgenannten Anmeldungen offenbarten IKR weiterverwendet werden.

Ebenfalls kann die Modularisierung nach PACT13, Fig. 28 unterstützt werden.

Gegebenenfalls kann bereits das Abbilden auf die VPU bzw. dessen Vorbereitung erfolgen, beispielsweise mittels der Durchführung des Plazierens der benötigten Ressourcen und des Routens der Verbindungen (Place and Route). Dies kann zum Beispiel nach per se bekannten Regeln des Plazierens und Routens geschehen.

Es ist auch möglich, mittels einer automatischen Analysemethode den extrahierten Code und/oder den übersetzten NML-Code auf seine Verarbeitungseffizienz hin zu analysieren. Dabei ist die Analysemethode bevorzugt so gewählt, daß der Interface-Code und die daraus entstehenden Performanceeinflüsse an geeigneter Stelle mit in die Analyse einfließen. Geeignete Analyseverfahren sind insbesondere in den vorgenannten Anmeldungen der vorliegenden Anmelder beschrieben.

Gegebenenfalls wird die Analyse durch eine komplette Übersetzung und Implementierung auf dem Hardware-System durchgeführt, indem das PROGRAMM ausgeführt und mit geeigneten Methoden, wie sie beispielsweise nach dem Stand der Technik bekannt sind, vermessen wird.

Es ist weiter möglich, daß basierend auf den durchgeführten Analysen, verschiedene durch die Extraktion für eine VPU gewählte Teile als ungeeignet identifiziert werden können. Umgekehrt kann die Analyse ergeben, daß bestimmte, für einen PROZESSOR extrahierte Teile zur Ausführung auf einer VPU geeignet wären.

Eine optionale Schleife, die nach der Analyse basierend auf geeigneten Entscheidungskriterien zurück in den Extraktionsteil führt, um diesen mit entsprechend der Analyse angepaßten Extraktionsvorgaben erneut auszuführen, ermöglicht die Optimierung des Übersetzungsergebnisses. Man hat somit eine Iteration. Dieses Vorgehen ist bevorzugt.

Eine Schleife kann an mehreren unterschiedlichen Stellen in den Compilerlauf eingebracht sein.

Der erhaltene NML-Code ist bei Bedarf entsprechend den Eigenschaften der verwendeten VPU zu partitionieren, d.h. in einzelne Teile zu zerlegen, die auf jeweils in die vorhandenen Ressourcen abgebildet werden können.

Eine Vielzahl derartiger Mechanismen, insbesondere auf Graphenanalyse basierende, sind nach dem Stand der Technik per se bekannt. Eine bevorzugte Variante basiert jedoch auf der Analyse der Programmsourcen und ist unter dem Begriff temporal Partitioning bekannt. Dieses Verfahren ist in der genannten PHD-Thesis von Cardoso beschrieben, die zu Offenbarungszwecken vollumfänglich eingegliedert wird.

Partitionierungsverfahren gleich welcher Art sind entsprechend des verwendeten VPU-Types zu adaptieren. Liegen VPUs vor, die die Speicherung von Zwischenergebnissen in Register und/oder Speicher zulassen, ist durch die Partitionierung die Einbindung der Speicher zur Speicherung von Daten und/oder Zuständen zu berücksichtigen. Die Partitionierungsalgorithmen (z. B. die temporale Partitionierung) sind entsprechend zu adaptieren. Gewöhnlicherweise wird die eigentliche Partitionierung und das Scheduling durch die genannten Patente jedoch erheblich vereinfacht und erst sinnvoll ermöglicht.

Manche VPUs bieten die Möglichkeit der differentiellen Rekonfiguration. Diese kann angewendet werden, wenn nur verhältnismäßig wenige Änderungen innerhalb der Anordnung der PAEs bei einer Rekonfiguration notwendig werden. Mit anderen Worten werden nur die Veränderungen einer Konfiguration gegenüber der aktuellen Konfiguration rekonfiguriert. Die Partitionierung kann in diesem Fall dergestalt sein, daß die auf eine Konfiguration folgende, gegebenenfalls differentielle Konfiguration nur die notwendigen Rekonfigurationsdaten enthält und keine vollständige Konfiguration darstellt. Es ist möglich, den Konfigurationsdatenoverhead zu Analysezwecken bei der Beurteilung der Aufteilungseffizient mit zu berücksichtigen.

Die Schedulingmechanismen für die partitionierten Codes können derart erweitert werden, daß das Scheduling durch Rückmeldungen der VPU an die jeweils rekonfigurierende Einheit (CT und/oder HOSTRECONF) gesteuert wird. Insbesondere wird dabei bei der Partitionierung die sich daraus ergebende Möglichkeit der bedingten Ausführung, d. h. der expliziten Bestimmung der nachfolgenden Partition durch den Zustand der aktuellen Partition genutzt. Mit anderen Worten ist es möglich, die Partitionierung derart zu optimieren, daß bedingte Ausführungen wie z. B. IF, CASE etc. berücksichtigt werden.

Werden VPUs verwendet, die die Fähigkeit besitzen Statussignale zwischen den PAEs zu übertragen, wobei PAEs auf die jeweils übertragenen Zustände reagieren und/oder diese mitverarbeiten, kann innerhalb der Partitionierung und des Schedulings zudem die bedingte Ausführung innerhalb der Anordnung der PAEs, also ohne die Notwendigkeit einer vollständigen oder teilweisen Rekonfiguration aufgrund eines geänderten bedingten Programmablaufs, berücksichtigt werden.

Weiterhin kann das Scheduling die Möglichkeit des Vorladens von Konfigurationen während der Laufzeit einer anderen Konfiguration unterstützen. Dabei können mehrere Konfigurationen möglicherweise auch spekulativ vorgeladen werden, d. h. ohne daß sichergestellt ist, daß die Konfigurationen überhaupt benötigt werden. Durch Selektionsmechanismen können dann zur Laufzeit die zu verwendenden Konfigurationen ausgewählt werden (siehe auch Beispiel NLS in DE 100 50 442.6, EP 01 102 674.7)

Eine zusätzliche oder alternative Variante sieht vor, dass die Datenverarbeitung innerhalb der an die CPU gekoppelten VPU exakt gleichviele Takte benötigt, wie die Datenverarbeitung innerhalb der Rechenpipeline der CPU. Insbesondere bei modernen Hochleistungs-CPUs mit einer Vielzahl von Pipelinestufen (>20) kann dieses Konzept ideal eingesetzt werden. Der besondere Vorteil ist, dass keine besonderen Synchronisationsmechanismen wie z.B. RDY/ACK notwendig sind und/oder keine Anpassung von Opcodes zur Registersteuerung erforderlich ist. Der Compiler hat bei diesem Verfahren sicherzustellen, dass die VPU die erforderliche Anzahl an Takten einhält und ggf. die Datenverarbeitung durch das Einfügen von Verzögerungsstufen wie z. B. einen Fall-Through FIFOs auszubalancieren wie er in anderen, vorerwähnten Anmeldungen beschrieben ist.

Der ausgegebene Code ist üblicherweise vollständig und bevorzugt ohne weitere Eingriffe auf den jeweils nachfolgenden Compilern verarbeitbar. Gegebenenfalls können Compilerflags und Constraints zur Steuerung nachfolgender Compiler generiert werden, wobei der Anwender falls gewünscht optional eigene Vorgaben hinzufügen und/oder die generierten Vorgaben modifizieren kann. Die nachfolgenden Compiler benötigen keine wesentlichen Modifikationen, so daß per se bekannte Standard-Tools prinzipiell einsetzbar sind.

Das vorgeschlagene Verfahren eignet sich somit beispielsweise insbesondere als Präprozessor bzw. Präprozessorverfahren vor Compilern und Entwicklungssystemen. Es soll aber ausdrücklich erwähnt werden, daß prinzipiell anstatt und/oder zusammen mit den zuvor beschriebenen Übersetzers auch Compiler nach PACT11 eingebunden werden können.

An die beschriebene Architektur, insbesondere direkt an die VPU kann ein FPGA gekoppelt sein, um feingranulare Datenverarbeitung zu ermöglichen und/oder ein flexibel adaptierbares Interface (z.B. diverse serielle Schnittstellen (V24, USB, etc.), diverse parallele Schnittstellen, Festplattenschnittstellen, Ethernet, Telekommunikationsschnittstellen (a/b, T0, ISDN, DSL, etc)) zu weiteren Baugruppen zu ermöglichen. Der FPGA kann dabei aus der VPU-Architektur, insbesondere durch die CT, und/oder durch die CPU konfiguriert werden. Der FPGA kann statisch, also ohne Rekonfiguration zur Laufzeit und/oder dynamisch, also mit Rekonfiguration zur Laufzeit, betrieben werden.

Es wurde bereits das Vorsehen eines Interface-Code angesprochen. Der Interface-Code, der in den extrahierten Code eingesetzt wird, kann durch unterschiedliche Verfahren vorgegeben werden. Bevorzugt wird der Interface-Code in einer Datenbank abgelegt, auf die zugegriffen wird. Die Einheit zur Umsetzung kann so ausgebildet sein, daß sie eine Auswahl, etwa des Programmierers, berücksichtigt, bei der beispielsweise durch Hinweise im PROGRAMM oder durch Compilerflags der passende Interface-Code ausgewählt wird. Dabei kann ein für das jeweils verwendete Implementierungsverfahren des VPU/CPU-Systems geeigneter Interface-Code gewählt werden.

Die Datenbank selbst kann durch unterschiedliche Methoden aufgebaut und gewartet werden. Einige Beispiele sollen zur Verdeutlichung der Möglichkeiten angeführt werden:
a) Der Interface-Code kann vom Lieferanten des Compilers für bestimmte Verbindungsverfahren zwischen VPU und CPU(s) vorgegeben werden. Dies kann bei der Organisation der Datenbank berücksichtigt werden, indem entsprechende Speichermittel für diese Angaben bereitgehalten werden.
b) Der Interface-Code kann vom Benutzer, der den Systemaufbau bestimmt hat, selbst geschrieben oder aus bestehenden (Beispiel-) Interface-Code modifiziert und der Datenbank zugefügt werden. Das Datenbankmittel wird hierzu bevorzugt benutzermodifizierbar gestaltet, um dem Benutzer die Datenbankmodifikation zu ermöglichen.
c) Der Interface-Code kann von eine Entwicklungssystem, mit dem beispielsweise der Systemaufbau des VPU-CPU-Systems geplant und/oder beschrieben und/oder getestet wurde, automatisch generiert werden.

Der Interface-Code ist gewöhnlicherweise bevorzugt derart gestaltet, daß er den Anforderungen der Programmiersprache entspricht, in der der extrahierte Code vorliegt in den der Interface-Code eingefügt werden soll.

### Debugging und Integration der Toolsets

In die Interface-Codes können Kommunikationsroutinen eingeführt werden, um die unterschiedlichen Entwicklungssysteme für PROZESSOR und VPU zu synchronisieren. Insbesondere kann Code für die jeweiligen Debugger (z. B. nach PACT11) aufgenommen werden.

Der Interface-Code ist so ausgebildet, daß er den Datenaustausch zwischen PROZESSOR und VPU ermöglicht und/oder steuert. Er ist daher eine geeignete und bevorzugte Schnittstelle, um die jeweiligen Entwicklungssysteme und Debugger zu steuern. Es ist beispielsweise möglich, einen Debugger für den PROZESSOR solange zu aktivieren, wie die Daten von dem Prozessor verarbeitet werden. Sobald die Daten über den Interface-Code an eine (oder mehrere) VPU übergeben werden, ist ein Debugger für VPUs zu aktivieren. Wird der Code zurück an den PROZESSOR gesendet, soll wiederum der PROZESSOR-Debugger aktiviert werden.

Es ist daher also möglich und bevorzugt, derartige Abläufe durch das Einfügen von Steuercodes für Debugger und/oder Entwicklungssysteme in den Interface-Code abzuwickeln.

Die Kommunikation und Steuerung zwischen den unterschiedlichen Entwicklungssystemen soll daher bevorzugt mittels in die Interface-Codes von PROZESSOR und/oder VPU eingebrachte Steuercodes abgewickelt werden. Die Steuercodes können dabei bestehenden Standards für die Steuerung von Entwicklungssystemen weitgehend entsprechen.

Die Verwaltung und Kommunikation der Entwicklungssysteme wird vorzugsweise wie beschrieben in die Interface-Codes abgewickelt, kann jedoch - sofern sinnvoll - auch getrennt von diesen, nach einem entsprechenden ähnlichen Verfahren abgewickelt werden.

In vielen Programmiersprachen, besonders in sequentiellen wie z. B. C, wird eine exakte zeitliche Reihenfolge implizit durch die Sprache vorgegeben. Bei sequentiellen Programmiersprachen geschieht dies beispielsweise durch die Reihenfolge der einzelnen Anweisungen. Sofern durch Programmiersprache und/oder den Algorithmus erforderlich, läßt sich die Zeitinformation auf Synchronisationsmodelle wie RDY/ACK und/oder REQ/ACK oder ein Time-Stamp-Verfahren abbilden.

Beispielsweise wird eine nachfolgende for-Schleife nur dann durchlaufen und iteriert, wenn eine Variable, hier inputstream je Durchlauf mit einem RDY quittiert ist. Bleibt RDY aus, wird der Schleifendurchlauf bis zum Eintreffen RDY angehalten:

```
 while TRUE
     s := 0
     for i: 1 to 3
         s := s + inputstream;
```

Die Eigenschaft der sequentiellen Sprachen, nur von der Befehlsverarbeitung gesteuert zu werden, wird mit dem Datenflussprinzip die Verarbeitung durch den Datenstrom, bzw. die Existenz von Daten zu steuern verbunden. Mit anderen Worten wird ein Befehl und/oder eine Anweisung (z. B. s := s + inputstream;) nur verarbeitet, wenn die Operation ausgeführt werden kann und die Daten verfügbar sind.

Bemerkenswert ist, daß dieses Verfahren gewöhnlicherweise zu keiner Änderung der Syntax oder Semantik einer Hochsprache führt.

Komplexere Funktionen einer Hochsprache, wie z. B. Schleifen, werden durch Makros realisiert. Die Makros werden vom Compiler vorgegeben und zur Übersetzungszeit instantiiert.

Die Makros sind entweder aus einfachen Sprachkonstrukten der Hochsprache oder auf Assemblerlevel aufgebaut. Makros können parametriert sein, um eine einfach Adaption an den beschriebenen Algorithmus zu ermöglichen. (vgl. auch PACT11)

Ein Standardprozessor z.B. ein RISC, CISC, DSP (CPU) wird also mit einem rekonfigurierbaren Prozessor (VPU) gekoppelt.

Zwei unterschiedliche, bevorzugt jedoch auch zugleich implementierbare Kopplungsvarianten könenn wie folgt beschrieben sein.

Eine erste Variante sieht eine direkte Ankoppelung an den Befehlssatz einer CPU vor (Befehlssatzkopplung).

Eine zweite Variante sieht eine Ankoppelung über Tabellen im Hauptspeicher vor. Es sind also Tabellenmittel vorgesehen.

Innerhalb eines Instruktionssatzes (ISA) einer CPU sind für gewöhnlich freie unbenutzte Befehle vorhanden. Einer oder eine Mehrzahl dieser freien unbenutzten Befehle wird nunmehr für die Steuerung von VPUs verwendet (VPUCODE).

Durch die Dekodierung eines VPUCODEs wird eine Konfigurationseinheit (CT) einer VPU angesteuert die in Abhängigkeit des VPUCODEs bestimmte Abläufe ausführt. Es ist also eine zur VPU-Decodierung ansprechbare CT vorhanden.

Beispielsweise kann ein VPUCODE das Laden und/oder Ausführen von Konfigurationen durch die Konfigurationseinheit (CT) für eine VPU auslösen.

In einer erweiterten Ausführung kann ein VPUCODE über eine Übersetzungstabelle, die bevorzugt von der CPU, alternativ aber auch von der oder einer VPU oder einer externen Einheit aus verwaltet wird, auf unterschiedliche VPU-Kommandos übersetzt werden.

Die Konfigurationstabelle kann in Abhängigkeit von dem ausgeführten CPU Programm oder Codeabschnitt gesetzt werden.

Die VPU lädt nach Eintreffen eines Ladekommandos Konfigurationen aus einem eigenen oder mit der CPU geteilten Speicher. Insbesondere kann eine VPU-Konfiguration im Code des aktuell ausgeführten CPU-Programmes beinhaltet sein.

Nach Erhalt eines Ausführungskommandos führt eine VPU die auszuführende Konfiguration aus und die entsprechende Datenverarbeitung durch. Das Beenden der Datenverarbeitung kann durch ein Terminierungssignal (TERM) an die CPU angezeigt werden. Dazu sind entsprechende Signalleitungen/InterruptEingänge usw. vorhanden und/oder ausgebildet.

Das Auftreten eines VPUCODEs können solange Wartezyklen auf der CPU ausgeführt werden, bis das Terminierungssignal (TERM) der Beendigung der Datenverarbeitung von der VPU eintrifft.

In einer bevorzugten Ausgestaltung wird mit der Verarbeitung der nächsten Codes fortgefahren. Tritt ein weiterer VPUCODE auf, kann sodann auf die Beendigung des vorhergehenden gewartet werden, oder sämtliche gestartete VPUCODEs werden in einer Verarbeitungspipeline eingereiht, oder ein Taskwechsel wird insbesondere wie nachfolgend beschrieben ausgeführt.

Die Beendigung einer Datenverarbeitung wird durch das Eintreffen des Terminierungssignal (TERM) in einem Statusregister signalisiert. Die Terminierungssignale treffen in der Reihenfolge einer möglichen Verarbeitungspipeline ein.

Die Datenverarbeitung auf der CPU kann durch das Testen des Statusregisters auf das Eintreffen eines Terminierungssignales synchronisiert werden.

In einer möglichen Ausgestaltung kann, sofern eine Applikation vor dem Eintreffen von TERM z.B. durch Datenabhängigkeiten nicht fortgesetzt werden kann, ein Taskwechsel ausgelöst werden.

Es ist bevorzugt, wenn lose Kopplungen zwischen Prozessoren und VPUs aufgebaut sind, bei welchen VPUs weitestgehend als unabhängige Coprozessoren arbeiten.

Eine derartige Kopplung sieht eine oder mehrere gemeinsame Datenquellen und -senken, zumeist über gemeinsame Bussysteme und/oder gemeinsame Speicher vor. Über DMAs und/oder andere Speicherzugriffskontroller werden Daten zwischen einer CPU und einer VPU ausgetauscht. Die Synchronisation der Datenverarbeitung erfolgt bevorzugt über eine Interruptsteuerung oder einen Statusabfragemechanismus (z.B. Polling).

Eine enge Ankopplung entspricht der vorab beschriebenen direkten Ankopplung einer VPU in den Befehlssatz einer CPU.

Bei einer direkten Rechenwerk-Ankopplung ist besonders auf eine hohe Rekonfigurationsperformance zu achten. Bevorzugt kann daher die Wave-Rekonfiguration zum Einsatz kommen. Desweiteren werden die Konfigurationsworte bevorzugt vorab derart vorgeladen, dass bei Ausführung des Befehls die Konfiguration besonders schnell (mittels Wave-Reconfiguration im Optimalfall innerhalb eines Taktes) konfiguriert werden kann. Im übrigen wäre auch möglich, anstelle einer Array-Teilkonfiguration bei hoch performanten, insbesondere aber auch bei überwiegend niederperformanten Anwendungen mehrere insbesondere identische Arrays vorzusehen, von diesen wenigstens eines für eine neue Task umzukonfigurieren, insbesondere im Vorgriff, und dann nach Bedarf anstelle einer Umkonfiguration oder Teilumkonfiguration eines integralen multidimensionalen partiell zur Laufzeit rekonfigurierbaren grobgranularen Feldes einfach auf ein anderes Array vollständig zu wechseln. Signale können dabei z. B. über MUX-/Demuxstufen den Teilarrays zugeführt werden, insbesondere I/O-, Daten-, Status- und/oder Triggersignale.

Für die Wave-Reconfiguration werden bevorzugt die voraussichtlich auszuführenden Konfigurationen vorab durch den Compiler zur Compilezeit erkannt und zur Laufzeit entsprechend vorgeladen.

Zum Zeitpunkt der Befehlsausführung wird die entsprechende Konfiguration gegebenenfalls für jede PAE einzeln und/oder für eine PAE-Teilmenge einzeln selektiert und ausgeführt. Auch derartige Verfahren sind nach den o.g. Schriften bekannt.

Eine bevorzugte Implementierung kann unterschiedliche Datentransfers zwischen einer CPU und VPU vorsehen. Drei besonders bevorzugte einzeln oder kombiniert einsetzbare Methoden werden nachfolgend beschrieben.

Bei einer Registerkopplung kann die VPU Daten aus einem CPU-Register entnehmen, verarbeiten und in ein CPU-Register zurückschreiben.

Bevorzugt werden Synchronisationsmechanismen zwischen der CPU und der VPU eingesetzt.

Beispielsweise kann die VPU durch das Einschreiben der Daten in ein CPU-Register durch die CPU ein RDY-Signal erhalten und daraufhin die eingeschriebenen Daten verarbeiten. Das Auslesen von Daten aus einem CPU-Register durch die CPU kann ein ACK-Signal generieren, wodurch die Datenabnahme durch die CPU der VPU signalisiert wird. Die Verwendung des per se bekannten RDY/ACK-Protokolls in unterschiedlicher Ausprägung ist vorliegend gerade bei grobgranularen Zellen der rekonfigurierbaren Einheiten vorteilhaft.

CPUs stellen typischerweise keine entsprechenden Mechanismen zur Verfügung.

Zwei mögliche Lösungen werden näher beschrieben:

Ein einfach zu realsierenden Ansatz ist, die Datensynchronisation über ein Statusregister durchzuführen. Beispielsweise kann die VPU das erfolgte Auslesen von Daten aus einem Register und das damit verbundene ACK-Signal und/oder das Einschreiben von Daten in ein Register und das damit verbundene RDY-Signal in dem Statusregister anzeigen. Die CPU testet zunächst das Statusregister und führt beispielsweise so lange Warteschleifen oder Taskwechsel aus, bis - je nach Operation - das RDY oder ACK eintraf. Danach führt die CPU den jeweiligen Registerdatentransfer aus.

In einer erweiterten Ausgestaltung wird der Befehlssatz der CPU um load/store-Instruktionen mit integrierter Statusabfrage (load_rdy, store_ack) erweitert. Beispielsweise wird bei einem store_ack nur dann ein neues Datenwort in ein CPU-Register geschrieben, wenn das Register vorher von der VPU ausgelesen wurde und ein ACK eintraf. Entsprechend liest load_rdy nur Daten aus einem CPU-Register, wenn die VPU vorher neue Daten eingeschrieben und ein RDY generiert hat.

Daten, die zu einer auszuführenden Konfiguration gehören können sukzessive, quasi durch Block-Moves ähnlich wie nach dem Stand der Technik in die CPU-Register geschrieben und/oder aus diesen gelesen werden. Ggf. implementierte Block-Move-Instruktionen können bevorzugt durch die beschriebene integrierte RDY/ACK Statusabfrage erweitert werden.

Es ist offensichtlich, dass eine Vielzahl von leichten Modifikationen und unterschiedlichen Ausgestaltungen dieses Grundverfahrens möglich sind.

Die bereits erwähnte Wave-Rekonfiguration erlaubt das Starten eines neuen VPU-Befehls und der entsprechenden Konfiguration, sobald die Operanden des vorhergehenden VPU-Befehls aus den CPU-Registern abgenommen wurden. Die Operanden für den neuen Befehl können direkt nach Befehlsstart in die CPU-Register geschrieben werden.

Entsprechend des Wave-Rekonfiguration-Verfahrens wird die VPU successive mit Fertigstellung der Datenverarbeitung des vorherigen VPU-Befehls für den neuen VPU-Befehl umkonfiguriert und die neuen Operanden verarbeitet.

Weiterhin können Daten zwischen einer VPU und einer CPU durch geeignete Buszugriffe auf gemeinsame Ressourcen ausgetauscht werden.

Sofern Daten ausgetauscht werden sollen, die kurz zuvor von der CPU verarbeitet wurden und daher voraussichtlich noch im bevorzugt vorzusehenden Cache der CPU liegen bzw. sofort anschließend von der CPU verarbeitet werden und daher sinnvollerweise in den Cache der CPU gelegt werden, werden diese bevorzugt von der VPU aus dem Cache der CPU gelesen, bzw. in den Cache der CPU geschrieben. Dies kann durch geeignete Analysen weitestgehend vorab zur Compilezeit der Applikation durch den Compiler festgestellt und der Binärcode entsprechend generiert werden.

Sofern Daten ausgetauscht werden sollen, die sich voraussichtlich nicht im Cache der CPU befinden bzw. voraussichtlich nicht nachfolgend im Cache der CPU benötigt werden, werden diese bevorzugt von der VPU direkt vom externen Bus und der damit verbundenen Datenquelle (z.B. Speicher, Peripherie) gelesen, bzw. an den externen Bus und der damit verbundenen Datensenke (z.B. Speicher, Peripherie) geschrieben. Dies kann durch geeignete Analysen weitestgehend vorab zur Compilezeit der Applikation durch den Compiler festgestellt und der Binärcode entsprechend generiert werden.

Bei einem Transfer über den Bus am Cache vorbei wird bevorzugt ein Protokoll zwischen Cache und Bus implementiert, das für einen korrekten Inhalt des Caches sorgt. Beispielsweise kann das bekannte MESI-Protokoll nach dem Stand der Technik hierzu verwendet werden.

Die beschriebenen Verfahren müssen zunächst keinen besonderen Mechanismus für die Unterstützung von Betriebssystemen vorsehen. Es ist nämlich bevorzugt, sicherzustellen, dass ein auszuführendes Betriebssystem sich entsprechend des Status einer zu unterstützenden VPU verhält, was möglich ist und wozu insbesondere Scheduler vorgesehen sein können.

Bei einer engen Rechenwerkkopplung wird bevorzugt das Statusregister der CPU abgefragt, in welches die angekoppelte VPU ihren Datenverarbeitungsstatus (Terminierungssignal) einträgt. Soll eine weitere Datenverarbeitung an die VPU übertragen werden, und die VPU hat die vorherige Datenverarbeitung noch nicht beendet wird gewartet und/oder bevorzugt ein Taskwechsel ausgeführt.

Für eine Coprozessorkopplung werden bevorzugt über das Betriebssystem, i.b. den Scheduler gesteuerte Mechanismen verwendet:

Ein einfacher Scheduler kann nach Übertragung einer Funktion auf eine VPU entweder den aktuellen Task auf der CPU weiterlaufen lassen, sofern dieser unabhängig und parallel zur Datenverarbeitung auf einer VPU ablaufen kann. Sofern oder sobald der Task auf die Beendigung der Datenverarbeitung auf der VPU warten muss, schaltet der Taskscheduler auf einen anderen Task um.

Jeder neu aktivierte Task wird, sofern er die VPU verwendet, vor Verwendung prüfen, ob diese für eine Datenverarbeitung zur Verfügung steht und/oder aktuell noch Daten verarbeitet; dann soll entweder auf die Beendigung der Datenverarbeitung gewartet oder bevorzugt der Task gewechselt werden.

Ein einfaches und dennoch leistungsfähiges Verfahren kann durch sogenannte Descriptor Tables aufgebaut werden, die bespielsweise folgendermaßen realisiert werden können:

Jeder Task generiert zum Aufruf der VPU eine oder mehrere Tabelle(n) (VPUCALL) mit einem geeigneten festgelegten Datenformat in dem ihm zugewiesenen Speicherbereich. Diese Tabelle beeinhaltet sämtliche Steuerinformation für eine VPU, wie z.B. das auszuführende Programm / die auszuführende Konfiguration und/oder Zeiger auf die Speicherstelle(n) oder Datenquellen der Eingangsdaten und/oder die Speicherstelle(n) oder Datensenken der Ergebnisdaten und/oder weitere Ausführungsparameter, z.B. Datenarraygrößen.

Im Speicherbereich des Betriebssystems befindet sich eine Tabelle oder verkettete Liste (LINKLIST), die auf sämtliche VPUCALL-Tabellen in der Reihenfolge ihrer Erstellung zeigt. Die Datenverarbeitung auf der VPU läuft nunmehr derart ab, dass ein Task einen VPUCALL erstellt und über das Betriebssystem die VPU aufruft. Das Betriebssystem erstellt einen Eintrag in der LINKLIST. Die VPU arbeitet die LINKLIST ab und führt die jeweils referenzierten VPUCALL aus. Die Beendigung einer der jeweiligen Datenabarbeitung wird jeweils durch einen entsprechenden Eintrag in die LINKLIST und/oder VPUCALL Tabelle angezeigt.

Die VPU arbeitet somit weitgehend unabhängig von der CPU. Das Betriebssystem und/oder die jeweiligen Task müssen lediglich die Tabellen (LINKLIST bzw. VPUCALL) überwachen.

Besonders performanceeffizient arbeiten die beiden Verfahren, wenn als VPU eine Architektur zum Einsatz kommt, die eine mit der Datenverarbeitung überlagerte und/oder überlagerbare Rekonfiguration zulässt.

Damit ist es möglich, eine neue Datenverarbeitung und eine ggf. damit verbundene Rekonfiguration sofort nach Lesen der letzten Operanden aus den Datenquellen zu starten. Mit anderen Worten ist für die Synchronisation nicht mehr das Beenden der Datenverarbeitung, sondern das Lesen der letzten Operanden erforderlich. Dadurch wird die Performance der Datenverarbeitung erheblich gesteigert.

Einen zusätzlichen Einfluß auf die Betrachtung und den Umgang mit Zuständen hat der mögliche Einsatz eines Betriebssystemes. Betriebssysteme verwenden beispielsweise Task-Scheduler zum Verwalten mehrere Aufgaben (Tasks), um ein Multitasking zur Verfügung zu stellen.

Task-Scheduler brechen Tasks zu einem bestimmten Zeitpunkt ab, starten andere Tasks und kehren nach deren Abarbeitung zur Weiterbearbeitung des abgebrochenen Tasks zurück.

Sofern sichergestellt ist, daß eine Konfiguration - die der Abarbeitung eines Tasks entspricht - nur nach der kompletten Abarbeitung - d.h. wenn alle innerhalb dieses Konfigurationszyklusses zu bearbeitende Daten und Zustände gespeichert sind - terminiert, können lokal relevante Zustände ungespeichert bleiben.

Sofern der Task-Scheduler allerdings Konfigurationen vor deren vollständiger Abarbeitung abbricht, müssen lokale Zustände und/oder Daten gespeichert werden. Weiterhin ist dies von Vorteil, wenn die Abarbeitungszeit einer Konfiguration nicht vorhergesagt werden kann. In Verbindung mit dem bekannten Halteproblem und dem Risiko, daß eine Konfiguration (z.B. durch einen Fehler) gar nicht terminiert, erscheint dies weiterhin sinnvoll, um damit einen Deadlock des gesamten Systems zu verhindern.

Mit anderen Worten sind, unter Berücksichtung von Taskwechseln, relevante Zustände auch als solche anzusehen, die für einen Taskwechsel und ein erneutes korrekes Aufsetzen der Datenverarbeitung notwendig sind.

Bei einem Taskswitch ist somit der Speicher für Ergebnisse und ggf. auch der Speicher für die Operanden zu sichern und zu einem späteren Zeitpunkt, also bei der Rückkehr zu diesem Task, wieder herzustellen. Dies kann vergleichbar zu den PUSH/POP Befehlen und Verfahren nach dem Stand der Technik erfolgen. Weiterhin ist der Zustand der Datenverarbeitung zu sichern, also der Zeiger auf die zuletzt vollständig bearbeiteten Operanden. Es sei hier besonders auf PACT18 verwiesen.

Abhängig von der Optimierung des Taskswitches gibt es beispielsweise zwei Möglichkeiten:
a) Die abgebrochene Konfiguration wird neu konfiguriert und nur die Operanden werden geladen. Die Datenverarbeitung beginnt von neuem, als ob die Bearbeutung der Konfiguration noch gar nicht begonnen wurde. Mit anderen Worten werden einfach alle Datenberechnungen von vorne an ausgeführt, wobei ggf. Berechnungen bereits zuvor durchgeführt wurden. Diese Möglichkeit ist einfach aber nicht sehr effizient.
b) Die abgebrochene Konfiguration wird neu konfiguriert, wobei die Operanden und bereits berechneten Ergebnisse in die jeweiligen Speicher geladen werden. Die Datenverarbeitung wird bei den Operanden fortgesetzt die nicht mehr vollständig berechnet wurden. Dieses Verfahren ist sehr viel effizienter, setzt aber voraus, daß ggf. zusätzliche Zustände, die während der Verarbeitung der Konfiguration entstehen, relevant werden, beispielsweise muß zumindest ein Zeiger auf die zuletzt vollständig verrechneten Operanden gesichert werden, damit bei deren Nachfolgern nach erfolgter neuer Konfiguration neu aufgesetzt werden kann.

Eine besonders bevorzugte Variante zur Verwaltung von relevanten Daten wird durch den nachfolgend beschriebenen Kontext Switch zur Verfügung gestellt. Bei Task-Wechseln und/oder bei der Ausführung von Konfigurationen und derem Wechsel (siehe beispielsweise Patentanmeldung PACT15, die zu Offenbarungszwecken vollumfänglich eingegliedert ist) kann es erforderlich sein, Daten oder Zustände, die typischerweise nicht zusammen mit den Arbeitsdaten in die Speicher abgelegt werden, da sie beispielsweise lediglich einen Endwert markieren, für eine nachfolgende Konfiguration zu sichern.

Der erfindungsgemäße Kontext Switch wird derart durchgeführt, dass eine erste Konfiguration entfernt wird, die zu sichernden Daten verbleiben in den entsprechenden Speichern (REG) (Speicher, Register, Zähler, etc).

Eine zweite Konfiguration wird geladen, diese verbindet die REG in geeigneter Weise und definierter Reihenfolge mit einem oder mehreren globalen Speicher(n).

Die Konfiguration kann beispielsweise Adressgeneratoren verwenden um auf den/die globalen Speicher zuzugreifen.

Die Konfiguration kann beispielsweise Adressgeneratoren verwenden um auf als Speicher ausgestaltete REG zuzugreifen. Entsprechend der konfigurierten Verbindung zwischen den REG werden die Inhalte der REG in einer definierten Reihenfolge in den globalen Speicher geschrieben, wobei die jeweiligen Adressen von Adressgeneratoren vorgegeben werden. Der Adressgenerator generiert die Adressen für den/die globalen Speicher derart, dass die beschriebenen Speicherbereiche (PUSHAREA) der entfernten ersten Konfiguration eindeutig zugeordnet werden können.

Mit anderen Worten, es sind bevorzugt für unterschiedliche Konfigurationen unterschiedliche Adressenräume vorgesehen. Die Konfiguration entspricht einem PUSH gewöhnlicher Prozessoren.

Danach verwenden andere Konfigurationen die Ressourcen.

Die erste Konfiguration soll wieder gestartet werden. Zuvor wird eine dritte Konfiguration gestartet, die die REG der ersten Konfiguration in einer definierten Reihenfolge miteinander verbindet.

Die Konfiguration kann beispielsweise Adressgeneratoren verwenden um auf den/die globalen Speicher zuzugreifen.

Die Konfiguration kann beispielsweise Adressgeneratoren verwenden um auf als Speicher ausgestaltete REG zuzugreifen.

Ein Adressgenerator generiert Adressen derart, dass ein korrekter Zugriff auf die der ersten Konfiguration zugeordnete PUSHAREA erfolgt. Die generierten Adressen und die konfigurierte Reihenfolge der REG sind derart, dass die Daten der REG in der ursprünglichen Ordnung aus den Speichern in die REG geschrieben werden. Die Konfiguration entspricht einem POP gewöhnlicher Prozessoren.

Die erste Konfiguration wird wieder gestartet.

Zusammengefaßt wird ein Kontext Switch derart durchgeführt, dass durch das Laden besonderer Konfigurationen, die ähnlich von PUSH/POP bekannter Prozessorarchitekturen arbeiten, die zu sichernden Daten mit einem globalen Speicher ausgetauscht werden. Die Funktion soll in einem Beispiel verdeutlicht werden: Eine Funktion addiert 2 Zahlenreihen, die Länge der Reihen ist zur Übersetzungszeit nicht bekannt, sondern erst zur Laufzeit.

```
 proc example
  while i<length do
    x[i] = a[i] + b[i]
```

Die Funktion wird nun während ihrer Ausführung unterbrochen, beispielsweise durch einen Task-Switch oder weil der für x vorgesehene Speicher voll ist. a,b,x befinden sich zu diesem Zeitpunkt erfindungsgemäß in Speichern. i und ggf. length müssen jedoch gesichert werden.

Dazu wird die Konfiguration example terminiert, wobei die Registerinhalte erhalten bleiben und eine Konfiguration push gestartet, die i und length aus den Registern liest und in einen Speicher schreibt.

```
 proc push
  mem[<push_adr_example>] = i
  push_adr_example++
  mem[<push_adr_example>] = length
```

Nach der Ausführung wird push terminiert und die Registerinhalte können gelöscht werden.

Andere Konfigurationen werden ausgeführt. Nach einiger Zeit wird die Konfiguration example wieder gestartet.

Zuvor wird eine Konfiguration pop gestartet, die die Registerinhalte wieder aus dem Speicher liest.

```
 proc pop
  i = mem[<push_adr_example>]
  push_adr_example++
  length = mem[<push_adr_example>]
```

Nach der Ausführung wird pop terminiert und die Registerinhalte bleiben bestehen. Die Konfiguration example wird wieder gestartet.

### Beschreibung der Figuren

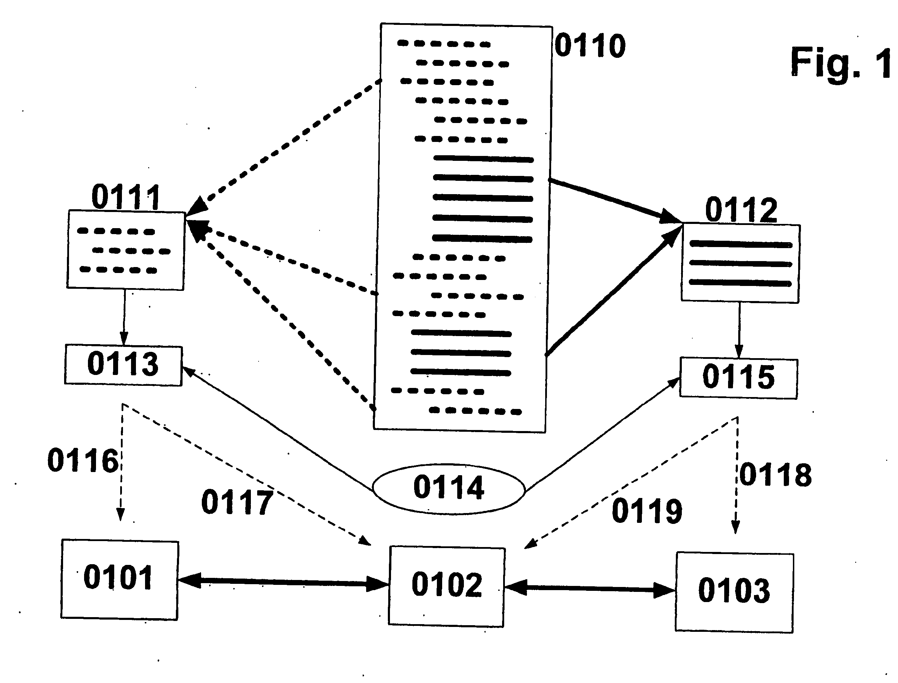

Figur 1 verdeutlicht ein Beispiel das vorgeschlagene Verfahren und zeigt einen möglichen Systemaufbau. Dabei ist ein PROZESSOR (0101) über ein geeignetes Interface (0102) zum Daten- und Statusaustausch mit einer VPU (0103) verbunden.

Ein PROGRAMM-Code (0110) wird (z. B. durch einen Präprozessor für einen Compiler) beispielsweise gemäß den beschriebenen Extraktionsmethoden in einen für den PROZESSOR geeigneten Teil (0111) und einen VPU-geeigneten Teil (0112) zerlegt.

0111 wird durch einen dem PROGRAMM-Code entsprechenden Standard Compiler (0113) übersetzt, wobei zuvor der zusätzliche Code zur Beschreibung und Verwaltung des Interfaces (0102) zwischen dem PROZESSOR und einer VPU aus einer Datenbank (0114) eingefügt wird. Auf 0101 ausführbarer sequentieller Code wird generiert (0116) und sofern notwendig die entsprechende Programmierung (0117) des Interfaces (0102). Der Standard-Compiler kann dergestalt sein, daß er als marktübliches Werkzeug oder im Rahmen einer marktüblichen Entwicklungsumgebung vorliegt. Der Präprozessor und/oder möglicherweise der VPU-Compiler und/oder möglicherweise der Debugger und weitere Werkzeuge können beispielsweise in eine bestehende marktübliche Entwicklungsumgebung integriert werden.

0112 wird durch einen VPU Compiler (0115) übersetzt, wobei zusätzlicher Code zur Beschreibung und Verwaltung des Interfaces (0102) aus einer Datenbank (0114) eingefügt wird. Auf 0103 ausführbare Konfigurationen werden generiert (0118) und sofern notwendig die entsprechende Programmierung (0119) des Interfaces (0102). Es soll ausdrücklich erwähnt werden, daß prinzipiell auch Compiler nach DE 101 39 170.6 für 0115 verwendet werden können.

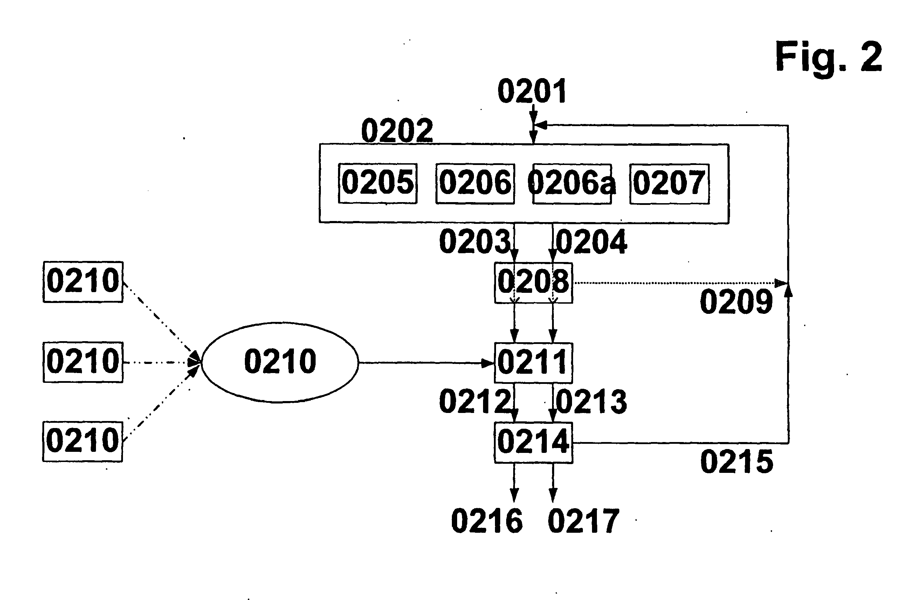

In Figur 2 ist beispielhaft ein prinzipieller Ablauf einer Compilation dargestellt. Ein PROGRAMM (0201) wird in der Extraktionseinheit (0202) nach unterschiedlichen Verfahren in VPU-Code(0203) und PROZESSOR-Code (0204) zerlegt. Unterschiedliche Methoden können in beliebiger Kombination zur Extraktion angewendet werden, beispielsweise Hinweise im ursprünglichen PROGRAMM (0205) und/oder Unterprogrammaufrufe (0206) und/oder Analyseverfahren (0207) und/oder eine Verwertung von objektorientierten Klassenbibliotheken (0206a). Der jeweils extrahierte Code wird ggf. übersetzt und ggf. auf seine Eignung für das jeweilige Zielsystem hin überprüft (0208). Dabei ist eine Rückkopplung (0209) auf die Extraktion möglich, um Verbesserungen durch eine geänderte Zuordnung der Codes zu einem PROZESSOR oder einer VPU bzw. einer Vielzahl derselben zu erhalten.

Danach (0211) wird 0203 durch den Interface-Code aus einer Datenbank (0210) erweitert (0212) und/oder 0204 wird durch den Interface-Code aus 0210 zu 0213 erweitert.

Der entstandene Code wird auf seine Performance analysiert (0214), ggf. ist eine Rückkopplung (0215) auf die Extraktion möglich, um Verbesserungen durch eine geänderte Zuordnung der Codes zum PROZESSOR oder einer VPU zu erhalten.

Der entstandene VPU-Code (0216) wird für eine weitere Übersetzung an einen nachgeschalteten für die VPU geeigneten Compiler weitergegeben. Der entstandene PROZESSOR-Code (0217) wird für die weitere Übersetzung in einem beliebigen nachgeschalteten für den PROZESSOR geeigneten Compiler weiterverarbeitet.

Es soll angemerkt werden, daß einzelne Schritte je nach Verfahren ausgelassen werden können. Wesentlich ist, daß ein zumindest weitgehend kompletter und ohne, wenigstens ohne signifikanten Eingriff durch den Programmierer direkt übersetzbarer Code an jeweils nachgeschaltete Compilersysteme ausgegeben wird.

Es wird demnach vorgeschlagen, daß ein Präprozessormittel mit einem Codeeingang für die Einspeisung von zu compilierendem Code, mit Codeanalysemitteln, insbesondere Codestruktur und/oder Datenformat- und/oder Datenstroms-Erkennungs- und/oder Bewertungsmitteln sowie mit einem Aufteilungsbewertungsmittel zur Bewertung einer im Ansprechen auf Signale aus dem Codeanalysemittel vorgenommenen Codeaufteilung sowie gegebenenfalls einem Iterationsmittel zur Wiederholung einer Codeaufteilung bis zum Erreichen stabiler und/oder hinreichend akzeptabler Werte mit zumindest zwei Teilcodeausgängen versehen ist, wobei ein erster Teilcodeausgang Teilcode für zumindest einen herkömmlichen Prozessor ausgibt, und wenigstens ein weiterer Teilcodeausgang zur Abarbeitung mit rekonfigurierbaren Logikeinheiten, insbesondere mehr- bzw. multidimensionale insbesondere Zellstrukturen aufweisend, insbesondere grobgranulare datenverarbeitende und/oder Logikzellen (PAEs) mit Rechenwerken und dergleichen sowie ggf. zugeordneten Registermitteln und/oder feingranularen Steuer- und/oder Kontrollmitteln wie Zustandsmaschinen, RDY/ACK-Trigger- und Kommunikationsleitungen usw. bestimmten Code ausgibt. Beide Teilcodeausgänge können in multiplexweise seriell auf einem physikalischen Ausgang liegen.

Die Datenbank für die Interface-Codes (0210) wird unabhängig und vor dem Compilerdurchlauf aufgebaut. Beispielsweise sind folgende Quellen für die Datenbank möglich: Vom Lieferanten vorgegeben (0220), vom Benutzer programmiert (0221) oder automatisch von einem Entwicklungssystem generiert (0222).

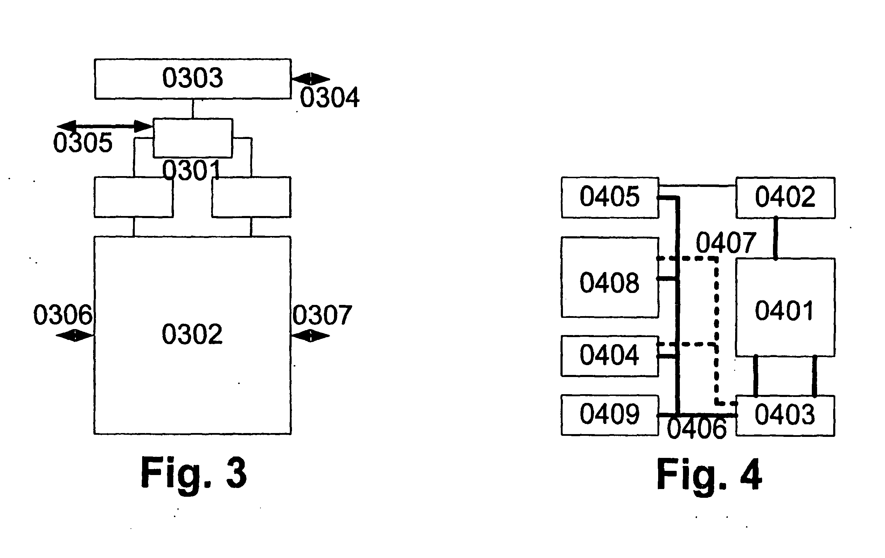

Der Aufbau einer besonders bevorzugten VPU ist in Figur 3 dargestellt. Vorzugsweise hierarchische Konfigurationsmanager (CT's) (0301) steuern und verwalten eine Anordnung von rekonfigurierbaren Elementen (PACs) (0302). Den CT's ist ein lokaler Speicher für die Konfigurationen zugeordnet (0303). Der Speicher verfügt weiterhin über ein Interface (0304) zu einem globalen Speicher, der die Konfigurationsdaten zur Verfügung stellt. Über ein Interface (0305) sind die Konfigurationsabläufe steuerbar. Ein Interface der rekonfigurierbaren Elemente (0302) zur Ablaufsteuerung und Ereignisverwaltung (0306) ist vorhanden, ebenso ein Interface zum Datenaustausch (0307).

Figur 4 zeigt einen Ausschnitt aus einem beispielhaften CPU System, beispielsweise einem DSP des Types C6000 von Texas Instruments (0401). Dargestellt sind Programmspeicher (0402), Datenspeicher (0403), beliebige Peripherie (0404) und EMIF (0405). Über einen Speicherbus (0406) und einem Peripheriebus (0407) ist eine VPU als Coprozessor integriert (0408). Ein DMA-Kontroller (EDMA) (0409) kann beliebige DMA-Transfers, beispielsweise zwischen Speicher (0403) und VPU (0408) oder Speicher (0403) und Peripherie (0404) durchführen.

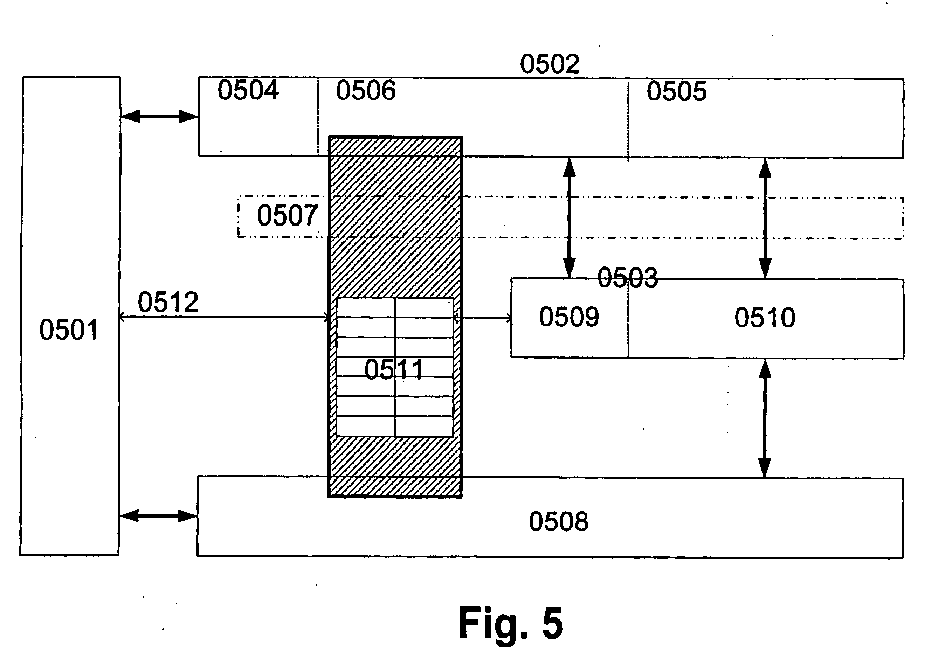

Figur 5 zeigt eine abstraktere Systemdefinition. Einer CPU (0501) ist Speicher (0502) zugeordnet auf den diese schreibenden und/oder lesenden Zugriff besitzt. Eine VPU (0503) ist mit dem Speicher gekoppelt. Die VPU ist in einen CT-Teil (0509) und die rekonfigurierbaren Elemente zur Datenverarbeitung (0510) untergliedert.

Zur Steigerung der Speicherzugriffe kann der Speicher mehrere unabhängige Zugriffsbusse aufweisen (multiport). In einer besonders bevorzugten Ausgestaltung ist der Speicher in mehrere unabhängige Segmente (Speicherbanks) segmentiert, wobei auf jede Bank unabhängig zugriffen werden kann. Sämtliche Segmente liegen vorzugsweise innerhalb eines einheitlichen Adressraums.

Vorzugsweise steht ein Segment hauptsächlich für die CPU zur Verfügung (0504), ein weiteres Segment steht hauptsächlich für die Datenverarbeitung der VPU zur Verfügung (0505), ein weiteres Segment steht hauptsächlich für die Konfigurationsdaten der VPU zur Verfügung (0506).

Typischerweise und bevorzugt weist eine vollausgestaltete VPU eigene Adressgeneratoren und/oder DMAs auf um Datentransfers durchzuführen. Alternativ und/oder zusätzlich ist es möglich, dass ein DMA (0507) innerhalb des Systems (Fig.5) für Datentransfers mit der VPU vorgesehen ist.

Das System enthält IO (0508) auf die CPU und VPU Zugriff haben können.

Sowohl CPU als auch VPU können jeweils dedizierte Speicherbereiche und IO-Bereiche aufweisen, auf die der jeweils andere keinen Zugriff hat.

Ein Datensatz (0511) der im Speicherbereich und/oder im IO-Bereich und/oder partiell in einem von beiden liegen kann wird zur Kommunikation zwischen CPU und VPU verwendet, z.B. zum Austausch von Basisparametern und Steuerinformation. Der Datensatz kann beispielsweise folgende Information beeinhalten:
1. Basisadresse(n) des CT-Speicherbereiches in 0506 zur Lokalisierung der Konfigurationen.
2. Basisadresse(n) von Datentransfers mit 0505.
3. IO Adressen von Datentransfers mit 0508.
4. Synchronisationsinformation, z.B. Zurücksetzen, anhalten, starten der VPU.
5. Statusinformation der VPU, z.B. Fehler oder Zustand der Datenverarbeitung.

Die Synchronisation der CPU und VPU erfolgt durch Polling von Daten und/oder bevorzugt durch Interruptsteuerung (0512).

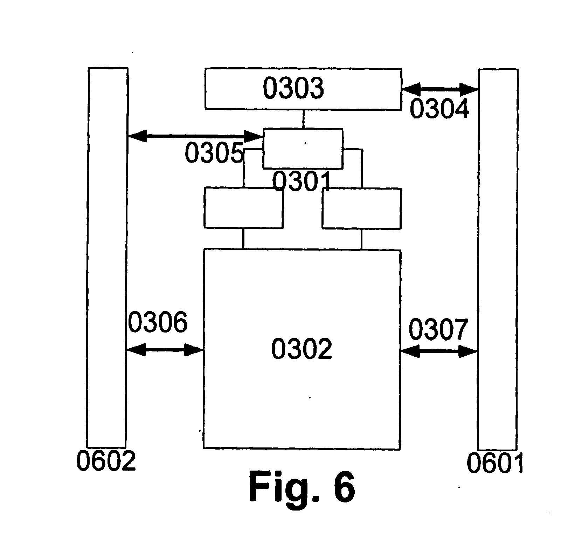

Figur 6 zeigt eine mögliche Ausgestaltung der Interfacestruktur einer VPU zur Einbindung in ein System ähnlich Figur 5. Dazu werden der VPU ein Speicher/DMA- und/oder IO-Interface zum Datentransfer zugeordnet (0601), ein weiteres System-Interface (0602) übernimmt die Ablaufsteuerung wie z.B. das Verwalten von Interrupts, das Starten/Stoppen der Verarbeitung, Austausch von Fehlerzuständen, etc..

Das Speicher/DMA- und/oder IO-Interface wird an einen Speicherbus und/oder IO-Bus angeschlossen.

Das System-Interface wird vorzugsweise an einen IO-Bus angeschlossen, kann jedoch alternativ oder zusätzlich entsprechend 0511 auch an einen Speicher angeschlossen sein.

Die Interfaces (0601, 0402) können zur Anpassung von unterschiedlichen Arbeitsfrequenzen von CPU und/oder VPU und/oder

System ausgestaltet sein, beispielsweise kann das System bzw. die CPU mit zB derzeit 500MHz und die VPU mit 200MHz arbeiten.

Die Interfaces können eine Übersetzung der Busprotokolle durchführen, beispielsweise kann das VPU interne Protokoll auf ein externes AMBA-Busprotokoll umgesetzt werden. Sie bewirken also Busprotokollübersetzungsmittel und/oder sind für die Busprotokollübersetzung ausgebildet, insbesondere die Busprotokollübersetzung zwischen internem VPU-Protokoll und bekanntem Busprotokoll. Es ist auch möglich, eine Konvertierung direkt auf CPU-interne Busprotokolle vorzusehen.

Das Speicher/DMA- und/oder IO-Interface unterstützt den Speicherzugriff der CT auf einen externen Speicher, der vorzugsweise direkt (memory mapped) erfolgt. Der Datentransfer der CT(s) und/oder PAC(s) kann gepuffert z.B. über FIFO-Stufen erfolgen. Externer Speicher kann direkt angesprochen und adressiert werden, weiterhin können DMA interne und/oder externe DMA-Transfers durchgeführt werden.

Über das System-Interface erfolgt die Steuerung der Datenverarbeitung, wie beispielsweise die Initialisierung und/oder der Start von Konfigurationen. Des weiteren werden Status und/oder Fehlerzustände ausgetauscht. Interrupts für die Steuerung und Synchronisation zwischen den CT's und einer CPU können unterstützt werden.

Das System-Interface kann VPU-interne Protokolle derart konvertieren, dass diese auf externe (Standard)-Protokolle umgesetzt werden (z.B. AMBA).

Ein bevorzugtes Verfahren zur Codegenerierung für das beschriebene System ist in anderen Teilen dieser Anmeldung beschrieben. Das Verfahren beschreibt einen Compiler, der Programmcode in Code für eine CPU und Code für eine VPU zerteilt. Nach unterschiedlichen Verfahren wird die Zerlegung auf die unterschiedlichen Prozessoren durchgeführt. In einer besonders bevorzugten Ausführung werden dabei die jeweiligen zerlegten Codes um die Interface-Routinen zur Kommunikation zwischen CPU und VPU erweitert. Die Erweiterung kann automatisch durch den Compiler erfolgen.

Die nachfolgende Tabellen zeigen beispielhafte Kommunikationen zwischen einer CPU und einer VPU. Den Spalten sind die jeweilig aktiven Funktionseinheiten zugeordnet: CPU, System-DMA und DMA-Interface (EDMA) bzw. Speicher-Interface (Speicher-I/F), System-Interface (System-I/F, 0602), CT's, sowie die PAC. In den Zeilen sind die einzelnen Zyklen in ihrer Ausführungsreihenfolge eingetragen. K1 referenziert eine auszuführende Konfiguration 1.

Die erste Tabelle zeigt beispielsweise einen Ablauf bei Verwendung der System-DMA (EDMA) zum Datentransfer:

| CPU | EDMA | System-I/F | CT's | PAC |
|---|---|---|---|---|
| Initiiere K1 | | | | |
| | Lade K1 | | | |
| Starte K1 | | | Konfiguriere K1 | |
| Initiiere laden der Daten per EDMA | | Starte K1 | | Warten auf Daten |
| Initiiere lesen der Daten per EDMA | Datentransfer lesen der Daten | | | Datenverarbeitung |
| | Datentransfer schreiben der Daten | Signalisiere Ende der Operation | | |

Es ist zu erwähnen, dass die Synchronisation zwischen der ED-MA und der VPU automatisch über das Interface 0401 erfolgt, d.h. DMA-Tranfers finden nur statt, wenn die VPU dafür bereit ist.

In einer zweiten Tabelle ist beispielsweise ein bevorzugter optimierter Ablauf dargestellt. Die VPU besitzt selbst direkten Zugriff auf den Konfigurationsspeicher (0306). Desweiteren werden die Datentransfers durch DMA-Schaltung innerhalb der VPU ausgeführt, die beispielsweise fest implementiert sein können und/oder durch die Konfiguration von konfigurierbaren Teilen der PAC entstehen.

| CPU | EDMA | System-I/F | CT's | PAC |
|---|---|---|---|---|
| Initiiere K1 | | | | |
| Starte K1 | Lesen der Konfiguration | | Konfiguriere K1 | |
| | Datentransfer lesen der Daten | Starte K1 | | Lese Daten |
| | | | | Datenverarbeitung |
| | Datentransferschreiben der Daten | Signalisiere Ende der Operation | | Schreibe Daten |

Der Aufwand für die CPU ist minimal.

Zusammenfassend befaßt sich die vorliegende Erfindung mit Verfahren, die eine Übersetzung einer klassischen Hochsprache wie Pascal, C, C++, Java, etc. auf eine rekonfigurierbare Architektur ermöglicht. Das Verfahren ist derart ausgelegt, daß nur die jeweils für die rekonfigurierbare Zielarchitektur geeigneten Teile des zu übersetzenden Programms extrahiert werden. Die verbleibenden Teile des Programms werden auf eine konventionelle Prozessorarchitektur übersetzt.

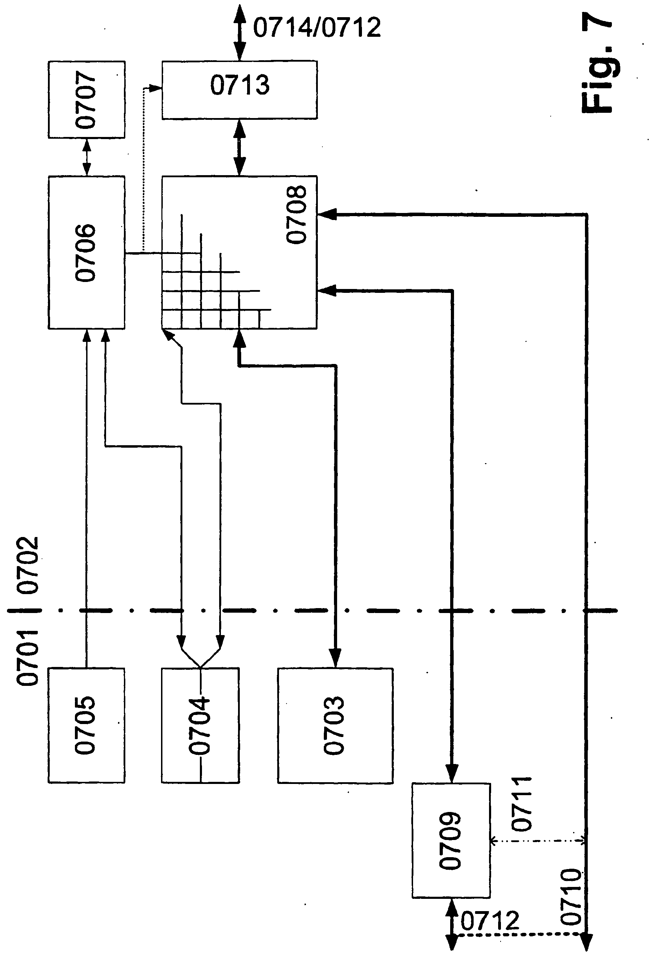

In Figur 7 sind aus Gründen der Übersichtlichkeit nur die relevanten Komponenten (i.b. der CPU) aufgezeigt sind, wobei typisch eine wesentliche Zahl weiterer Komponenten und Netzwerke vorhanden sein wird.

Eine bevorzugte Implementierung wie beispielsweise in Figur 1 dargestellt kann unterschiedliche Datentransfers zwischen einer CPU (0701) und VPU (0702) vorsehen. Die auf der VPU auszuführenden Konfigurationen werden durch den Instruktionsdekoder (0705) der CPU selektiert, der bestimmte für die VPU bestimmte Instruktionen erkennt und die CT (0706) derart ansteuert, dass diese die entsprechenden Konfigurationen aus einem der CT zugeordneten Speicher (0707) - der insbesondere mit der CPU geshared werden oder derselbe wie der Arbeitsspeicher der CPU sein kann, in das Array aus PAEs (PA, 0108) lädt.

Es sind CPU-Register (0703) vorgesehen, um bei einer Registerkopplung Daten zu entnehmen, zu verarbeiten und in ein CPU-Register zurückschreiben. b Für die Datensynchronisation ist ein Statusregister (0704) vorgesehen. Weiter ist ein Cache vorgesehen, der dafür vorgesehen ist, daß wenn Daten ausgetauscht werden sollen, die kurz zuvor von der CPU verarbeitet wurden, diese voraussichtlich noch im Cache (0709) der CPU liegen bzw. sofort anschließend von der CPU verarbeitet werden.

Der externe Bus ist mit (0710) bezeichnet und es werden darüber zB aus einer damit verbundenen Datenquelle (z.B. Speicher, Peripherie) gelesen, bzw. an den externen Bus und der damit verbundenen Datensenke (z.B. Speicher, Peripherie) geschrieben. Dieser Bus kann insbesondere derselbe wie der externe Bus der CPU sein (0712 & gestrichelt).

Ein Protokoll (0711) zwischen Cache und Bus ist implementiert, das für einen korrekten Inhalt des Caches sorgt. Mit (0713) ist ein FPGA (0713) bezeichnet, der mit der VPU gekoppelt sein kann, um feingranulare Datenverarbeitung zu ermöglichen und/oder ein flexible adaptierbare Interface (0714) (z.B. diverse serielle Schnittstellen (V24, USB, etc.), diverse parallele Schnittstellen, Festplattenschnittstellen, Ethernet, Telekommunikationsschnittstellen (a/b, T0, ISDN, DSL, etc)) zu weiteren Baugruppen und/oder dem externen Bussystem (0712) zu ermöglichen.

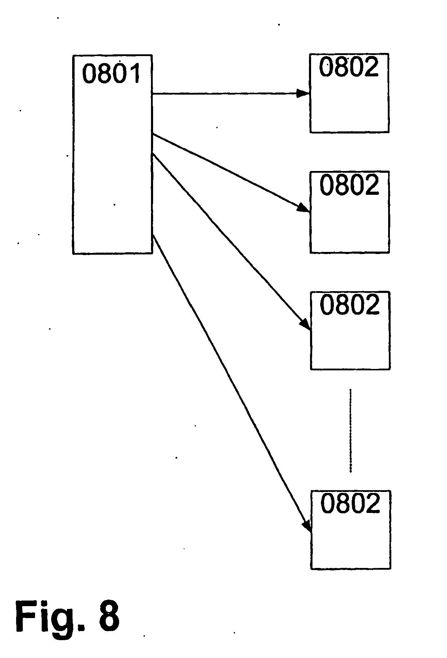

Entsprechend Figur 8 befindet sich Speicherbereich des Betriebssystems eine Tabelle oder verkettete Liste (LINKLIST, 0801), die auf sämtliche VPUCALL-Tabellen (0802) in der Reihenfolge ihrer Erstellung zeigt.

Beschrieben wurde vorstehend somit ein Verfahren zur Übersetzung von Programmen auf ein System, bestehend aus wenigstens einem ersten Prozessor und einer rekonfigurierbaren Einheit, wobei vorgesehen ist, dass die Codeteile, die für die rekonfigurierbare Einheit geeignet sind, bestimmt und extrahiert und/oder separiert werden, wobei verbleibender Code zur Abarbeitung durch den ersten Prozessor bestimmt wird, wobei bevorzugt dem für den Prozessor extrahierten Code Interface-Code zugefügt wird, der eine Kommunikation zwischen Prozessor und rekonfigurierbarer Einheit entsprechend des Systems ermöglicht und/oder wobei dem für die rekonfigurierbare Einheit extrahierten Code solcher Interface-Code zugefügt wird, der eine Kommunikation zwischen Prozessor und rekonfigurierbarer Einheit entsprechend des Systems ermöglicht und/oder wobei der zu extrahierende Code aufgrund von automatisierten Analysen festgelegt wird, und/oder wobei Hinweise im Code zur Feststellung des zu extrahierenden Code automatisch ausgewertet werden, und/oder wobei der zu extrahierende Code aufgrund von Aufrufen von Unterprogrammen festgestellt wird, und/oder wobei ein Interface-Code vorgesehen wird, der eine Speicherkopplung (Shared-Memory) vorsieht und/oder eine Registerkopplung und/oder eine Kopplung mittels eines Netzwerkes bewirkt, und/oder wobei der extrahierte Code und/oder mit einer gegebenen Extraktion erzielbaren Resultate analysiert wird und gegebenenfalls die Extraktion mit neuen verbesserten Parametern erneut gestartet wird, und/oder wobei dem extrahierten Code Steuer-Code zur Verwaltung und/oder Steuerung und/oder Kommunikation der Entwicklungssysteme zugefügt wird, und/oder wobei der erste Prozessor eine konventionelle Prozessorarchitektur aufweist, insbesondere ein Prozessor mit von-Neumann - und/oder Harwardarchitektur, Kontroller, CISC-, RISC-, VLIW-, DSP-Prozessor.

Beschrieben wurde vorstehend auch ein Verfahren insbesondere zur Übersetzung von Programmen auf ein System, bestehend aus einem Prozessor und einer rekonfigurierbaren Einheit, wobei die Codeteile, die für die rekonfigurierbare Einheit geeignet sind, extrahiert werden und der verbleibende Code derart extrahiert wird, dass er mittels eines beliebigen gewöhnlichen, unmodifizierten, für den Prozessor geeigneten Compilers übersetzbar ist.

Es wurde weiter beschrieben eine Vorrichtung zur Datenverarbeitung mit wenigstens einem herkömmlichen Prozessor und wenigstens einer rekonfigurierbaren Einheit, wobei ein Mittel zum Informationsaustausch, insbesondere von Daten- und Statusinformation, zwischen herkömmlichem Prozessor und rekonfigurierbarer Einheit vorgesehen ist, wobei das Mittel so ausgebildet ist, dass ein Austausch von Daten- und Statusinformation zwischen denselben während der Abarbeitung eines oder mehrerer Programme möglich ist und/oder ohne dass insbesondere die Datenverarbeitung auf dem rekonfigurierbaren Prozessor und/oder dem herkömmlichen Prozessor signifikant unterbrochen werden muss.

## Patentansprüche

1. Verfahren zur Ausführung von Programmen auf einem System, bestehend aus
wenigstens einem ersten Prozessor und
einer rekonfigurierbaren Einheit, die
ein rekonfigurierbares Array und
einen diesem zugeordneten Konfigurationsmanager umfasst sowie
einen Task-Scheduler,
wobei die Ausführung den Wechsel von Tasks umfasst und
wobei bei zumindest einigen Taskwechseln zwischen auf der rekonfigurierbaren Einheit abzuarbeitenden Programmteilen ein Kontext-Switch erfolgt,
indem mittels des Konfigurationsmanagers unterschiedliche Konfigurationen nacheinander in die rekonfigurierbare Einheit einkonfiguriert werden und wobei ein Kontext-Switch die Ausführung von Push- und/oder Pop-Konfigurationen umfasst, welche mittels der zugeordneten Konfigurationsmanager konfigurierbar sind,
wobei der Kontext-Switch von einer ersten auf eine zweite, nachfolgende Konfiguration derart ausgeführt wird, dass
eine erste Konfiguration entfernt wird,
zu sichernde Daten in den entsprechenden Registern verbleiben,
eine Push-Konfiguration geladen wird, welche die entsprechenden Speicher in geeigneter Weise und definierter Reihenfolge mit globalem Speicher verbindet,
und erst danach, gegebenenfalls nach Ausführung einer Pop-Konfiguration, welche Speicher in einer definierten Reihenfolge für die nachfolgend auszuführende Konfiguration verbindet,
der Kontext-Switch auf die zweite Konfiguration erfolgt,
so dass der Scheduler bei der Abarbeitung Tasks dem Prozessor oder
der rekonfigurierbaren Einheit wie erforderlich zuweisen kann.

2. Verfahren nach dem vorhergehenden Anspruch, **dadurch gekennzeichnet, dass** zumindest eine der POP- und/oder PUSH-Konfigurationen Adressgeneratormittel zur Generierung von Adressen aufweist.

3. Verfahren nach einem der vorhergehenden Ansprüche, **dadurch gekennzeichnet, dass** PUSH- und/oder POP-Konfigurationen Adressgeneratoren verwenden, um auf den globalen und/oder den entsprechenden Speicher zuzugreifen.

## Claims

1. Method for executing programs on a system comprising
at least a first processor and
a reconfigurable unit which comprises a reconfigurable array and
a configuration manager assigned to the latter,
as well as a task scheduler,
wherein
execution involves changing tasks, and
wherein a context switch is carried out in the case of at least some task changes between program portions to be executed on the reconfigurable unit,
by configuring different configurations in succession into the reconfigurable unit using the configuration manager, and
wherein a context switch comprises the execution of push and/or pop configurations which can be configured using the associated configuration manager are obtained,
wherein the context switch from a first configuration to a second, subsequent configuration is carried out in such a manner that
a first configuration is removed,
data to be protected remain in the corresponding registers,
a push configuration which connects the corresponding memories to the global memory in a suitable manner and in a defined order is loaded,
and only then is the context switch to the second configuration carried out,
if necessary after executing a pop configuration which connects memories in a defined order for the configuration to be subsequently executed,
with the result that the scheduler can allocate tasks to the processor or
to the reconfigurable unit as required during execution.

2. Method according to the preceding claim, **characterized in that** at least one of the pop and/or push configurations has address generator means for generating addresses.

3. Method according to either of the preceding claims, **characterized in that** push and/or pop configurations use address generators in order to access the global memory and/or the corresponding memory.

## Revendications

1. Procédé destiné à l'exécution de programmes sur un système, comprenant :
au moins un premier processeur et
une unité reconfigurable qui comprend
une matrice reconfigurable et
un gestionnaire de configuration associé à celle-ci ainsi qu'un planificateur de tâches,
dans lequel l'exécution comprend le changement de tâches et
dans lequel, lors d'au moins certains changements de tâches entre des parties de programmes devant être exécutées sur l'unité reconfigurable, il se produit un changement de contexte,
par le fait qu'au moyen du gestionnaire de configuration, des configurations différentes sont successivement introduites dans l'unité reconfigurable
et
dans lequel un changement de contexte comprend l'exécution des configurations de type pousser (Push) et/ou sortir (Pop) qui sont configurables au moyen du gestionnaire de configuration associé,
dans lequel le changement de contexte est effectué d'une première à une seconde configurations successives de telle manière
qu'une première configuration soit éliminée,
que les données devant être sauvegardées dans les registres correspondants persistent,
qu'une configuration de type Push soit chargée, celle-ci reliant la mémoire correspondante d'une manière appropriée et selon une séquence définie à une mémoire globale,
et seulement après, le cas échéant après exécution d'une configuration Pop qui lie la mémoire selon une séquence définie pour la configuration devant être exécutée ensuite,
que le changement de contexte passant à la seconde configuration soit effectué,
afin que le planificateur puisse affecter des tâches selon les besoins lors de leur exécution au processeur ou à l'unité reconfigurable.

2. Procédé selon les revendications précédentes, **caractérisé en ce qu'**au moins l'une des configurations Pop et/ou Push comprend un moyen générateur d'adresses destiné à générer des adresses.

3. Procédé selon l'une quelconque des revendications précédentes, **caractérisé en ce que** les générateurs d'adresses utilisent des configurations Push et/ou Pop afin d'accéder à la mémoire globale et/ou à la mémoire correspondante.
